# EUROPEAN PATENT SPECIFICATION

(11) **EP 4 079 128 B1**
(45) Date of publication and mention of the grant of the patent: **17.06.2026**
(21) Application number: 20904142.5
(22) Date of filing: 14.12.2020
(51) Int. Cl.: A01B 69/00

(54) **WORK MACHINE**
ARBEITSMASCHINE
MACHINE DE TRAVAIL

(30) Priority: 18.12.2019 JP 2019228666
(43) Date of publication of application: 26.10.2022
(73) Proprietor: KUBOTA CORPORATION, Osaka-shi, Osaka 556-8601 (JP)
(72) Inventor: YOSHIMURA, Fumiya, Sakai-shi, Osaka 590-0823 (JP); YAMAGUCHI, Kotaro, Sakai-shi, Osaka 590-0823 (JP); TAMATANI, Kenji, Sakai-shi, Osaka 590-0823 (JP); MORIMOTO, Takanori, Sakai-shi, Osaka 590-0823 (JP); SAKUTA, Ken, Sakai-shi, Osaka 590-0823 (JP)
(74) Representative: Müller-Boré & Partner Patentanwälte PartG mbB
(86) International application number: PCT/JP2020/046481
(87) International publication number: WO 2021/125124

(56) References cited:
- EP-A1- 3 104 245
- WO-A1-2019/208817
- JP-A- 2016 095 660
- JP-A- 2018 000 039
- JP-A- 2018 161 085
- JP-A- 2019 008 409
- JP-A- 2019 082 873
- JP-A- 2019 088 227
- JP-A- 2019 121 009
- US-A1- 2006 200 294
- US-A1- 2012 283 909
- US-A1- 2019 072 937

## Description

### [TECHNICAL FIELD]

The present invention relates to a working machine having a working device linked thereto.

### [BACKGROUND ART]

The technique disclosed in Patent document 1 is known as a technique to prepare a travel route (work/travel line) for automatic travel of a working machine such as tractor. A working vehicle (working machine) of Patent document 1 includes an acquiring unit to acquire position data of an outer periphery of an agricultural field, and a work setting unit to set, on the basis of the position data, a work/travel line for travel of a travel machine body (machine body) in the agricultural field.
JP 2018 000039 A describes a work vehicle provided with an acquisition part for acquiring positional data of outer peripheries of a farm field and a work setting part for setting work travel lines on which a traveling machine body runs in a field based on the position data.
EP 3 104 245 A1 describes a method for setting a travel path of an unmanned work vehicle for when an operation is carried out by the autonomously-traveling unmanned work vehicle together with a manned work vehicle that accompanies the unmanned work vehicle.
US 2006/200294 A1 describes an electronic machine management system for initiating switching and actuating procedures with positional accuracy in agricultural working machines.

US 2019/072937 A1 describes a device that enables application of fertilizer in an amount corresponding to a growth condition of a crop in a field. [RELATED ART DOCUMENTS]

### [PATENT DOCUMENTS]

[Patent document 1] Japanese Unexamined Patent Application Publication No. 2018-39

### [DISCLOSURE OF THE INVENTION]

### [PROBLEMS TO BE SOLVED BY THE INVENTION]

In Patent document 1, a work/travel line (planned travel route) can be prepared and work can be done while automatic travel is performed along the work/travel line. However, when the working device is a spreader such as a fertilizer spreader or an agricultural chemical spreader, since a work range in a front-rear direction differs depending on the category of work done by the working device, some areas may be left with no work done and work efficiency may decrease.

The present invention was made in order to solve such an issue of the conventional technique, and an object thereof is to provide a working machine that is capable of accurately and efficiently doing work at intended positions. The present invention is defined by the independent claim. Preferred examples are defined in the dependent claims.

### [EFFECTS OF THE INVENTION]

The above-described working machine is capable of accurately and efficiently doing work at intended positions.

### [BRIEF DESCRIPTION OF THE DRAWINGS]

FIG. 1 shows a block diagram of a working machine.
FIG. 2 illustrates a raising/lowering device.
FIG. 3A illustrates an agricultural field map and a planned travel route.
FIG. 3B illustrates a work range.
FIG. 3C illustrates a spreading work range.
FIG. 4 illustrates an example of a reference setting screen.
FIG. 5 illustrates an example of a map registration screen.
FIG. 6A illustrates how an outline of an agricultural field (agricultural field map) is determined from a traveled path.
FIG. 6B illustrates how an outline of an agricultural field (agricultural field map) is determined from points of turn on a traveled path.
FIG. 6C illustrates how an outline (agricultural field map) is determined from switch operations during travel.
FIG. 7 illustrates an example of an area setting screen.
FIG. 8 illustrates an example of a work selection screen.
FIG. 9A illustrates an example of a first settings screen.
FIG. 9B illustrates an example of a second settings screen.
FIG. 10A is a diagram in which unit work segments are prepared in a work area.
FIG. 10B illustrates a unit work segment differing from those of FIG. 10A.
FIG. 10C illustrates a unit work segment differing from those of FIGS. 10A and 10B.
FIG. 11 illustrates how a planned travel route is prepared.
FIG. 12A is a first diagram illustrating setting of work start positions and work end positions by a work setting unit.
FIG. 12B is a second diagram illustrating setting of work start positions and work end positions by the work setting unit.
FIG. 12C is a third diagram illustrating setting of work start positions and work end positions by the work setting unit.
FIG. 13 illustrates an example of automatic travel.
FIG. 14 is a general side view of the working machine.

### [MODE FOR CARRYING OUT THE INVENTION]

The following description discusses an embodiment of the present invention with reference to drawings.

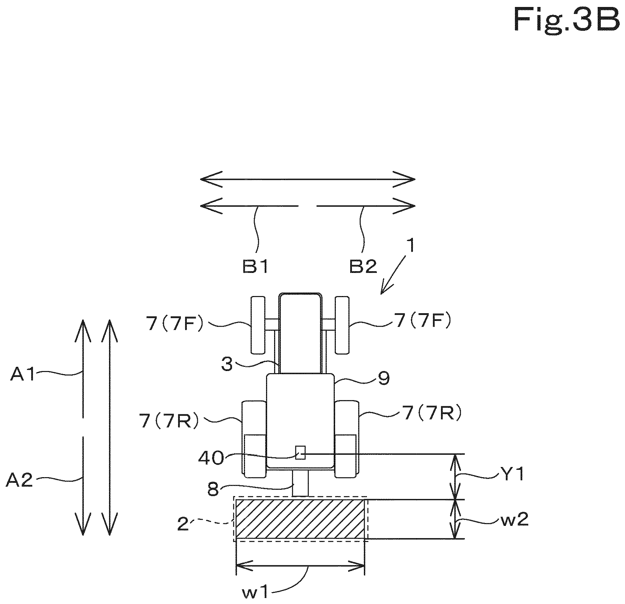

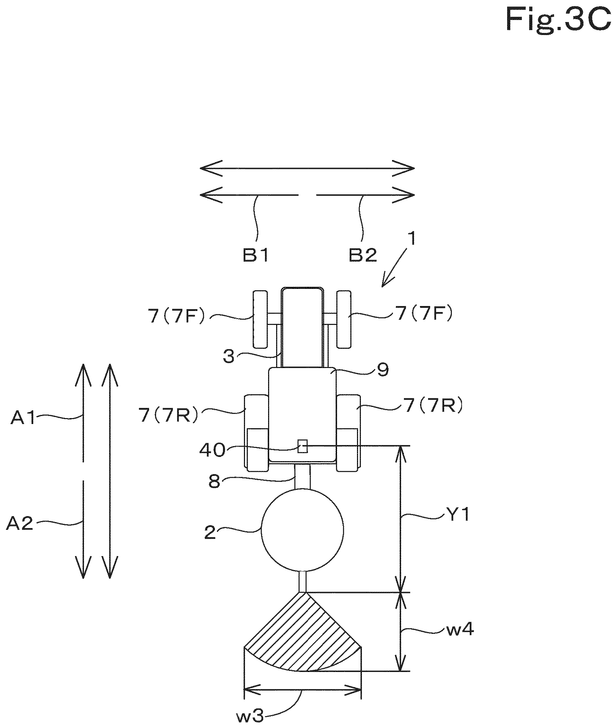

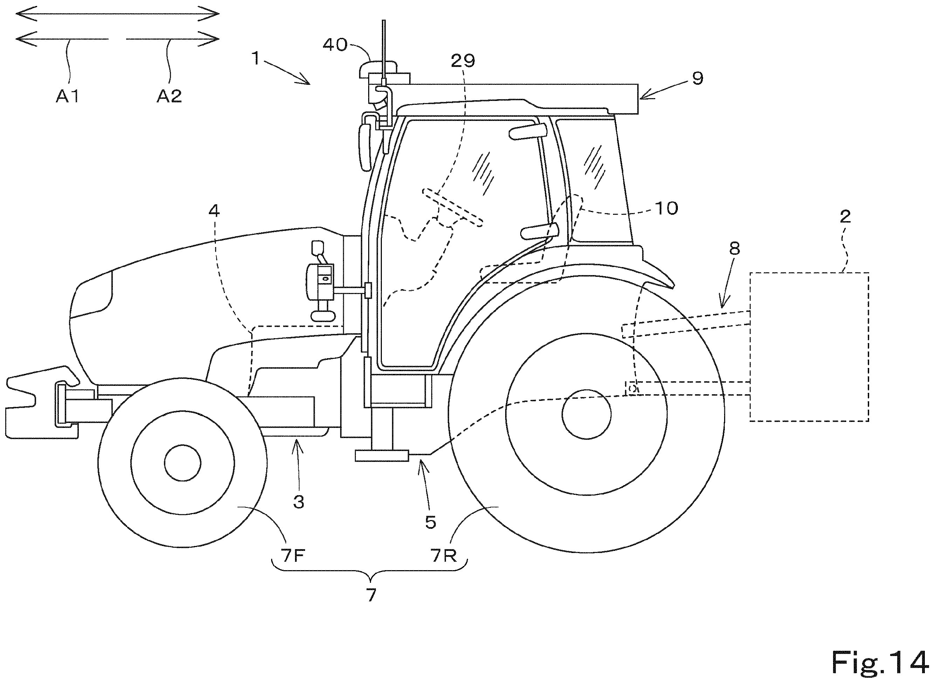

FIG. 14 illustrates a tractor, which is an example of a working machine 1. The working machine 1 is discussed using a tractor as an example, but the working machine 1 is not limited to a tractor and may be a rice transplanter or a combine. In embodiments of the present invention, descriptions are based on the assumption that the front of the working machine 1 as seen from an operator (driver) seated on an operator's seat 10 (indicated by arrow A1 in FIGS. 3B, 3C, and 14) is "front", the rear of the working machine 1 as seen from the operator is "rear" (indicated by arrow A2 in FIGS. 3B, 3C, and 14), the left side of the working machine 1 as seen from the operator is "left" (near side in FIG. 14, indicated by arrow B1 in FIGS. 3B and 3C), and the right side of the working machine 1 as seen from the operator is "right" (far side in FIG. 14, indicated by arrow B2 in FIGS. 3B and 3C). The descriptions are also based on the assumption that a horizontal direction orthogonal to a front-rear direction of the working machine 1 is a width direction.

As illustrated in FIG. 14, the working machine 1 includes: a machine body (travel vehicle body) 3 with a traveling device 7; a prime mover 4; and a transmission 5. The traveling device 7 includes front wheel(s) 7F and rear wheel(s) 7R. The front wheels 7F may be tire-shaped wheels and may be crawler-shaped wheels. The rear wheels 7R also may be tire-shaped wheels and may be crawler-shaped wheels. The prime mover 4 is a diesel engine, an electric motor, and/or the like. The transmission 5 is capable of changing driving forces for the traveling device 7 by changing speed stages and switching the traveling state of the traveling device 7 between forward and rearward traveling states. The machine body 3 is provided with a cabin 9, and the cabin 9 is provided with the operator's seat 10 therein.

The machine body 3 is provided with a linkage at the rear thereof. The linkage is a swinging drawbar which connects a working device 2 and the machine body 3 but does not raise or lower the working device 2, a raising/lowering device 8 which is composed of a three-point linkage or the like and which raises and lowers the working device 2, or the like. The working device 2 can be attached to and detached from the linkage. By linking the working device 2 to the linkage, it is possible for the machine body 3 to tow the working device 2. Examples of the working device 2 at least include spreaders. Examples of the spreaders include a fertilizer spreader (broadcaster), an agricultural chemical spreader for spreading agricultural chemicals, a water spreader for spreading water, and the like. Examples of the working device further include a cultivator for cultivation, a transplanter for planting, a mower for mowing grass or the like, a tedder for tedding grass or the like, a rake for raking grass or the like, a baler for baling grass or the like, and the like, in addition to the above-described spreaders. Note that the following description discusses an example case in which a fertilizer spreader as a spreader is linked to the linkage.

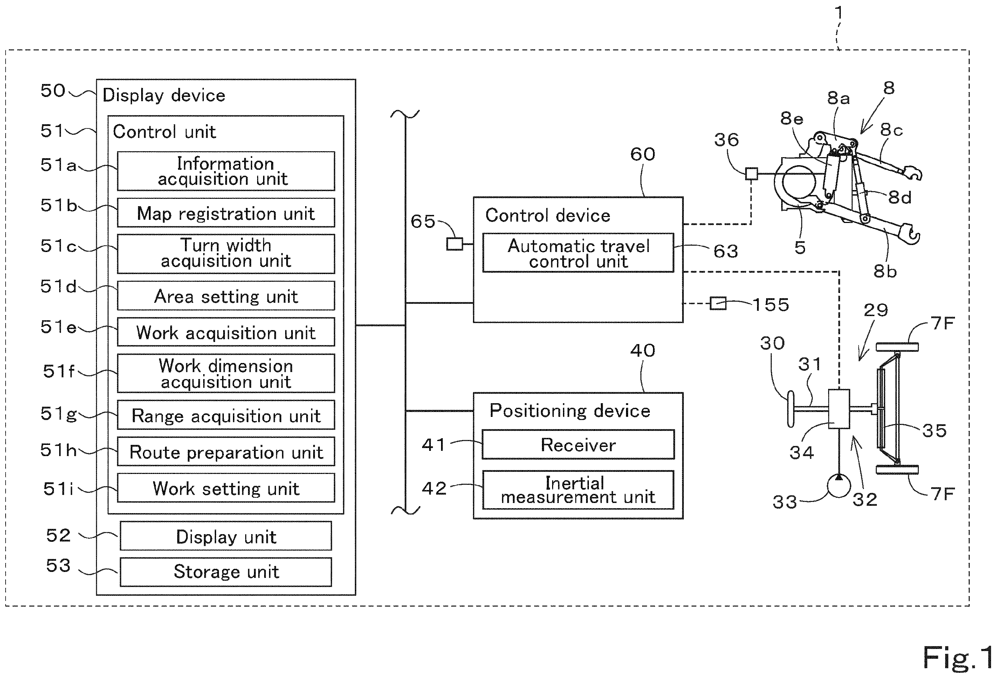

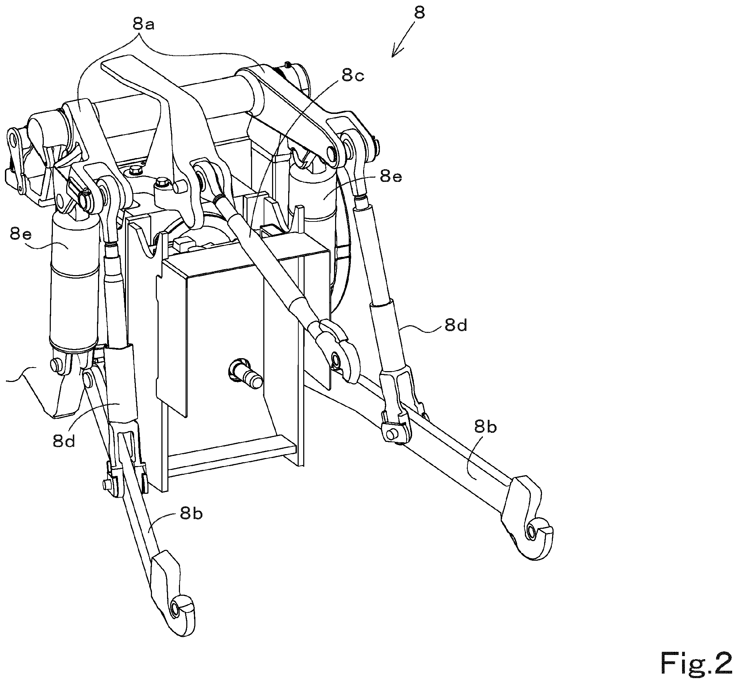

As illustrated in FIGS. 1 and 2, the raising/lowering device 8 includes lift arms 8a, lower links 8b, a top link 8c, lift rods 8d, and lift cylinders 8e. A front end of each lift arm 8a is supported on an upper rear portion of a case (transmission case) housing the transmission 5 such that the lift arm 8a is swingable up and down. The lift arm 8a is driven by a corresponding lift cylinder 8e to swing (raised or lowered). The lift cylinder 8e is composed of a hydraulic cylinder. The lift cylinder 8e is connected to a hydraulic pump via a control valve 36. The control valve 36 is a solenoid valve or the like to cause the lift cylinder 8e to extend and retract.

As illustrated in FIG. 1, a front end of each lower link 8b is supported on a lower rear portion of the transmission 5 such that the lower link 8b is swingable up and down. A front end of the top link 8c is supported, at a position higher than the lower link 8b, on a rear portion of the transmission 5 such that the top link 8c is swingable up and down. Each lift rod 8d connects a corresponding lift arm 8a and a corresponding lower link 8b. The working device 2 is linked to rear portions of the lower links 8b and the top link 8c. When the lift cylinders 8e are driven (extend or retract), the lift arms 8a ascend or descend, and the lower links 8b connected to the lift arms 8a via the lift rods 8d also ascend or descend. With this, the working device 2 swings up or down (raised or lowered) about front portions of the lower links 8b.

As illustrated in FIG. 1, the working machine 1 includes a steering unit 29. The steering unit 29 includes a steering wheel 30, a rotation shaft (steering shaft) 31 which rotates as the steering wheel 30 rotates, and an assist mechanism (power steering mechanism) 32 to assist steering performed using the steering wheel 30. The assist mechanism 32 includes a hydraulic pump 33, a control valve 34 supplied with hydraulic fluid discharged from the hydraulic pump 33, and a steering cylinder 35 which is actuated by the control valve 34. The control valve 34 is a solenoid valve which is actuated according to a control signal. The control valve 34 is, for example, a three-way switching valve which achieves multi-position switching by movement of a spool or the like. The positions of the control valve 34 can also be switched by steering by the steering shaft 31. The steering cylinder 35 is connected to arms (knuckle arms) which change the orientation of the front wheels 7F.

Therefore, upon operation of the steering wheel 30, the position and the degree of opening of the control valve 34 change according to the steering wheel 30, and the steering cylinder 35 extends or retracts leftward or rightward according to the position and the degree of opening of the control valve 34, making it possible to change the steering direction of the front wheels 7F. Note that the foregoing steering unit 29 is an example, and the foregoing configuration does not imply limitation.

As illustrated in FIG. 1, the working machine 1 includes a positioning device 40. The positioning device 40 is capable of detecting the position thereof (measured position information including latitude and longitude) by a satellite positioning system (positioning satellites) such as D-GPS, GPS, GLONASS, BeiDou, Galileo, and/or Michibiki. Specifically, the positioning device 40 receives satellite signals (positions of positioning satellites, time of transmission, correction information, and/or the like) from the positioning satellites, and detects the position (e.g., latitude and longitude) of the working machine 1, i.e., a machine body position VP1, on the basis of the satellite signals. The positioning device 40 includes a receiver 41 and an inertial measurement unit (IMU) 42. The receiver 41 is a device which includes an antenna and/or the like and which receives satellite signals from the positioning satellites, and is attached to the machine body 3 separately from the inertial measurement unit 42. In the present embodiment, the receiver 41 is attached to the machine body 3, e.g., the cabin 9. Note that the location at which the receiver 41 is attached is not limited to those described in embodiments.

The inertial measurement unit 42 includes an acceleration sensor to detect acceleration, a gyroscope sensor to detect angular velocity, and/or the like. The inertial measurement unit 42 is provided on the machine body 3, for example, below the operator's seat 10, and is capable of detecting the roll angle, pitch angle, yaw angle, and/or the like of the machine body 3.

As illustrated in FIG. 1, the working machine 1 includes an input device. The input device is a device to receive various settings regarding the working machine 1. The input device is, for example, a display device 50 which is operable and which displays predetermined input screens M5 and M6 to receive input of settings, a switch via which the operation of inputting settings can be performed, and/or the like. In the present embodiment, the input device is, for example, the display device 50 of the working machine 1. The display device 50 includes a control unit 51, a display unit 52, and a storage unit 53. The control unit 51 is composed of a CPU, electric/electronic circuit(s), and/or the like, and performs various control regarding the display device 50. The display unit 52 is operable, is composed of a panel or the like such as a liquid crystal panel, a touchscreen, and/or the like, and displays various information regarding the working machine 1.

The storage unit 53 is composed of nonvolatile memory(memories) and/or the like. The storage unit 53 stores, for example, application program(s) for assisting work and/or the like done by the working machine 1, and, upon startup of the application program(s), the display device 50 functions as a work assistance device to assist work. Note that, also when the display device 50 functions as a work assistance device, processing that the display device 50 as the work assistance device performs is performed by the control unit 51 which is hardware.

As illustrated in FIG. 1, the working machine 1 includes an information acquisition unit 51a, a map registration unit 51b, a turn width acquisition unit 51c, an area setting unit 51d, a work acquisition unit 51e, a work dimension acquisition unit 51f, a range acquisition unit 51g, a route preparation unit 51h, and a work setting unit 51i. In the present embodiment, the display device 50 includes the information acquisition unit 51a, the map registration unit 51b, the turn width acquisition unit 51c, the area setting unit 51d, the work acquisition unit 51e, the work dimension acquisition unit 51f, the range acquisition unit 51g, the route preparation unit 51h, and the work setting unit 51i. The information acquisition unit 51a, the map registration unit 51b, the turn width acquisition unit 51c, the area setting unit 51d, the work acquisition unit 51e, the work dimension acquisition unit 51f, the range acquisition unit 51g, the route preparation unit 51h, and the work setting unit 51i are each composed of electric/electronic circuit(s) of the control unit 51 of the display device 50, program(s) stored in a CPU and/or the like of the control unit 51, and/or the like. Note that, in the present embodiment, the information acquisition unit 51a, the map registration unit 51b, the turn width acquisition unit 51c, the area setting unit 51d, the work acquisition unit 51e, the work dimension acquisition unit 51f, the range acquisition unit 51g, the route preparation unit 51h, and the work setting unit 51i are composed of the control unit 51, but may be composed of electric/electronic circuit(s) and/or the like other than the control unit 51, and may be composed of, for example, a control device 60 of the working machine 1.

The information acquisition unit 51a acquires information regarding relative positions of the machine body 3 and the working device 2. The information acquisition unit 51a acquires information inputted into the display device 50. Specifically, the information acquisition unit 51a acquires a reference distance Y1 which is the distance from a predetermined position on the machine body 3 to a predetermined position on the working device 2. For example, as illustrated in FIG. 3B and 3C, the reference distance Y1 is the distance between the positioning device 40 and a front edge of a work range of the working device 2 in the front-rear direction (direction of travel).

Note that the reference distance need only be a reference for calculation of the relative positions of the machine body 3 and the working device 2. The reference distance may be the distance between the positioning device 40 and a rear edge of the linkage (raising/lowering device 8) (i.e., front portion of the working device 2) in the front-rear direction (direction of travel), and may be the distance from a rear edge of the machine body 3 to a front edge of a work range w2 of the working device 2.

Furthermore, the information acquisition unit 51a need only acquire information regarding the relative positions of the machine body 3 and the working device 2, and the information is not limited to information inputted into the input device (display device 50). Information regarding the relative positions of the machine body 3 and the working device 2 may be pre-stored in the storage unit 53 and the information acquisition unit 51a may acquire the information regarding the relative positions of the machine body 3 and the working device 2 from the storage unit 53.

The map registration unit 51b registers an agricultural field map MP of a certain agricultural field, for example, registers positions corresponding to the outline of a certain agricultural field. The map registration unit 51b acquires position information of the outline of the agricultural field on the basis of, for example, machine body position(s) VP1 detected by the positioning device 40 of the working machine 1, and stores the position information and the agricultural field in the storage unit 53 such that the position information and the agricultural field are associated with each other. Note that the map registration unit 51b need only be capable of registering agricultural field map(s) MP of certain agricultural field(s), and, for example, may externally acquire agricultural field map(s) MP via wireless or wired communication or a storage medium and register the agricultural field map(s) MP. A method of registering agricultural field map(s) MP is not limited to the above-described method.

The turn width acquisition unit 51c acquires a width (turn width) W1 of a turn area E1 which is an area where the machine body 3 makes a turn. The turn area E1 is, for example, an area including a footpath and its surrounding area. The turn width acquisition unit 51c acquires the turn width W1 by acquiring information inputted into the input device (display device 50) via the storage unit 53.

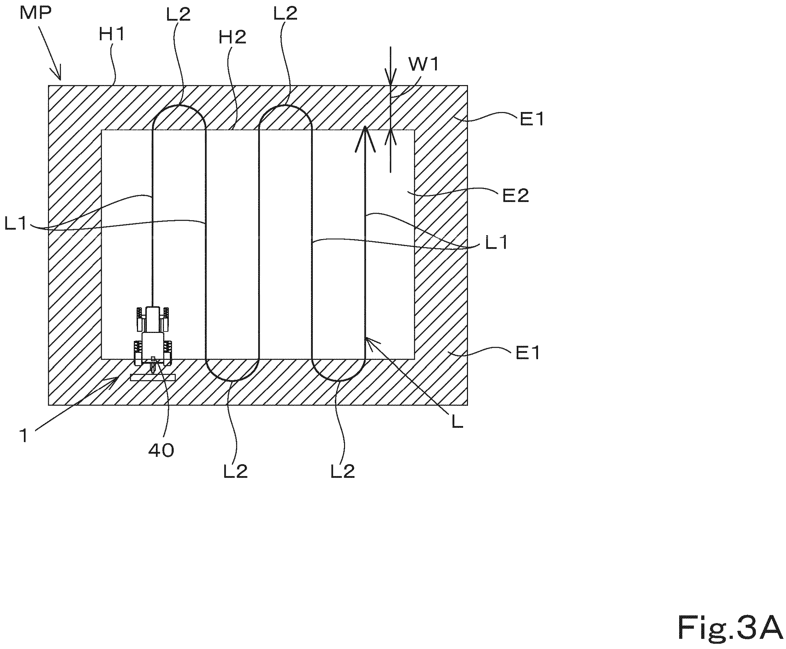

The area setting unit 51d sets an area in which the working device 2 does work as illustrated in FIG. 3A, that is, a work area E2 which is the agricultural field map MP excluding the turn area E1, on the agricultural field map MP. The area setting unit 51d sets the work area E2 on the basis of the turn width W1 acquired by the turn width acquisition unit 51c. The area setting unit 51d registers the work area E2 on the agricultural field map MP stored in the storage unit 53. The area setting unit 51d sets, as the work area E2, an area defined by an outline H2 that is offset inward from the outline H1 of the agricultural field map MP by the turn width W1.

Note that the area setting unit 51d need only be capable of setting the work area E2. For example, the area setting unit 51d may set the work area E2 on the agricultural field map MP upon designation of the position of the outline of the work area E2 by a pointer or the like on the agricultural field map MP displayed on the display unit 52 of the display device 50. A method thereof is not limited to the method as described above.

The work acquisition unit 51e acquires the working device 2 attached to the linkage (raising/lowering device 8), work content (work category) of the working device 2, and/or the like. The work acquisition unit 51e acquires the working device 2, the work content, and/or the like by acquiring information inputted into the input device (display device 50) via the storage unit 53. For example, the storage unit 53 stores therein a plurality of working devices 2 that can be attached to the working machine 1, i.e., identification information for identification of the working devices 2 such as the names, model numbers, product numbers, and/or the like of the working devices 2, work content of each of the working devices 2, the categories thereof, and/or the like, and the work acquisition unit 51e acquires a corresponding working device 2 or work content of the working device 2 stored in the storage unit 53 on the basis of the information inputted into the input device.

The work dimension acquisition unit 51f acquires a widthwise work range w1 of the working device 2 (a widthwise work range w1 of a spreader is particularly referred to as a widthwise spreading work range w3). As illustrated in FIGS. 3B and 3C, the widthwise work range w1 of the working device 2 (hereinafter referred to as a first work dimension) is a width over which the working device 2 does work against the ground such as an agricultural filed (width over which work is done). Furthermore, the first work dimension w1 is, for example, the greatest widthwise dimension of the range where work is done by the working device 2.

As illustrated in FIG. 3C, in the case where the working device 2 is a working device 2 that spreads a material onto the agricultural field such as a fertilizer spreader, the first work dimension w1, i.e., the widthwise spreading work range (hereinafter referred to as a first spreading dimension) w3, is a width over which fertilizer spreading is performed, and the first spreading dimension w3 can be changed by controlling, for example, an opening angle of a shutter for passage of fertilizer by operating the fertilizer spreader. The first spreading dimension w3 varies depending on the particle size of the fertilizer. Specifically, as the particle size of the fertilizer to be spread by the fertilizer spreader increases, the first spreading dimension w3 decreases, whereas, as the particle size of the fertilizer decreases, the first spreading dimension w3 increases.

The work dimension acquisition unit 51f acquires the first work dimension w1 on the basis of information received by the display device 50. Specifically, input screen(s) M5 and/or M6 displayed on the display device 50, i.e., an input device, receives input of the first work dimension w1, and the storage unit 53 stores the first work dimension w1 such that the first work dimension w1 is associated with a corresponding working device 2. The work dimension acquisition unit 51f is capable of acquiring the first work dimension w1 from the storage unit 53 on the basis of the information acquired by the work acquisition unit 51e.

The route preparation unit 51h refers to an agricultural field map MP registered in the storage unit 53, and prepares a travel route (planned travel route) L for automatic travel of the working machine 1 on the agricultural field map MP, as illustrated in FIG. 3A. The planned travel route L includes straight section(s) (straight route(s)) L1 on which the working machine 1 travels straight and turn section(s) (turn route(s)) L2 on which the working machine 1 turns. The straight section(s) L1 is/are mainly prepared in the work area E2, and the turn section(s) L2 is/are mainly prepared in the turn area E1.

The range acquisition unit 51g acquires a front-rear work range w2 of the working device 2 (hereinafter referred to as second work dimension). The range acquisition unit 51g acquires the second work dimension w2 on the basis of information received by the input device. As illustrated in FIGS. 3B and 3C, the second work dimension w2 of the working device 2 is a front-rear dimension over which the working device 2 does work against the ground such as an agricultural field, and is, for example, the largest front-rear dimension from the front edge to the rear edge of the range w2 where work is done by the working device 2. Note that, when the working device 2 is a working device 2 that spreads a material onto the agricultural field such as a spreader, the second work dimension w2 is a rearward spreading distance.

First, the following description discusses a case in which the range acquisition unit 51g acquires the second work dimension w2 of a working device 2 other than a spreader which does fertilizer spreading work. The storage unit 53 stores the second work dimension w2 such that the second work dimension w2 is associated with the working device 2, and the range acquisition unit 51g is capable of acquiring the second work dimension w2 from the storage unit 53 on the basis of information acquired by the work acquisition unit 51e. Thus, when the working device 2 linked to the linkage is not a spreader such as a fertilizer spreader, an agricultural chemical spreader, a water spreader, or the like, the range acquisition unit 51g acquires a pre-set second work dimension w2 from the storage unit 53. Note that, although the second work dimension w2 is pre-stored in the storage unit 53 in the above embodiment, the work dimension w2 may be pre-stored in the storage unit 53 such that the work dimension w2 is associated with its corresponding working device 2 and may be changeable as needed.

Next, the following description discusses an example case in which the range acquisition unit 51g acquires a spreading work range w4 that is a range where spreading work is done by a spreader in a front-rear direction thereof, i.e., a rearward spreading distance w4 (hereinafter referred to as a second spreading dimension). The input screen M6 displayed on the display device 50, i.e., an input device, receives input of the second spreading dimension w4, and the storage unit 53 stores the second spreading dimension w4 such that the second spreading dimension w4 is associated with the spreader. The range acquisition unit 51g is capable of acquiring the second spreading dimension w4 from the storage unit 53 on the basis of the information about the working device 2 acquired by the work acquisition unit 51e. Thus, when the working device 2 linked to the linkage is a spreader, the range acquisition unit 51g acquires, from the storage unit 53, the second spreading dimension w4 which has been inputted into and received by the display device 50 and which is associated with the spreader.

The work setting unit 51i sets work start position(s) ST*n* and work end position(s) ET*n* for the working device 2. The work setting unit 51i sets the work start position(s) ST*n* and the work end position(s) ET*n* for the spreader so that the work start position ST*n* and the work end position(s) ET*n* are at different positions according to the spreading work range w4 acquired by the range acquisition unit 51g. The work setting unit 51i sets the work start position(s) ST*n* and the work end position(s) ET*n* for the working device 2 on the planned travel route L according to the working device 2 linked to the linkage. The work setting unit 51i sets the work start position(s) ST*n* and the work end position(s) ET*n* on the basis of, for example, a boundary X1 between the work area E2 and the turn area E1. Furthermore, the work setting unit 51i sets the work start position(s) ST*n* and the work end position(s) ETn on the planned travel route L.

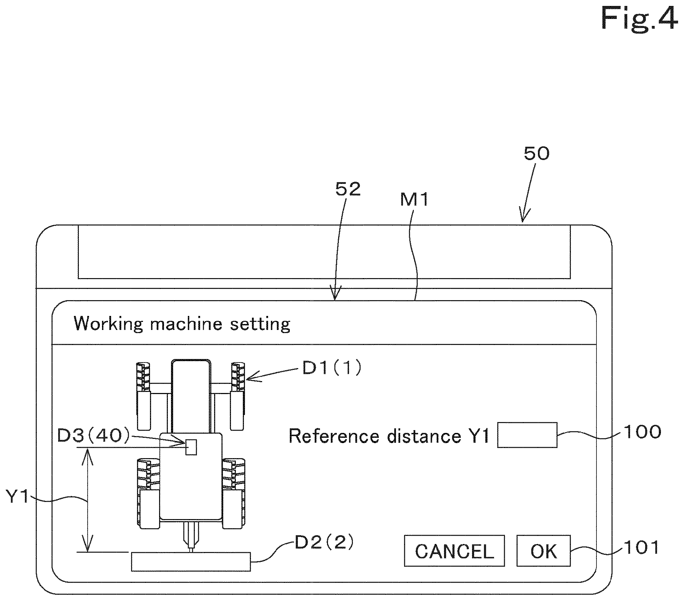

The following description discusses, in detail, a screen displayed on the display unit 52 of the display device 50 and the acquisition of the reference distance Y1 by the information acquisition unit 51a. Upon predetermined operation on the display device 50 by an operator, the display device 50 displays, on the display unit 52, a reference setting screen M1 for input of information (for example, information about dimension(s) including the reference distance Y1) about the working machine 1, as illustrated in FIG. 4. The reference setting screen M1 includes a shape D1 representing the working machine (tractor) 1, a shape D2 representing the working device 2, and a shape D3 representing the positioning device 40. The reference setting screen M1 includes a distance input section 100 for input of the reference distance Y1 and a first input confirmation button 101.

The distance input section 100 is for input of the reference distance Y1. The reference distance Y1 is inputted by operating a predetermined operation item displayed in the reference setting screen M1, an operation switch on the display device 50, and/or the like.

The first input confirmation button 101 is a piece of graphics via which operation to confirm the reference distance Y1 inputted into the distance input section 100 can be performed, i.e., via which operation to confirm the reception of the input of the reference distance Y1 can be performed. Thus, upon input of the reference distance Y1 into the distance input section 100 and operation of the first input confirmation button 101, the storage unit 53 stores the reference distance Y1 inputted into the distance input section 100 such that the reference distance Y1 is associated with the working machine 1. The information acquisition unit 51a acquires the reference distance Y1 from the storage unit 53 on the basis of information acquired by the information acquisition unit 51a.

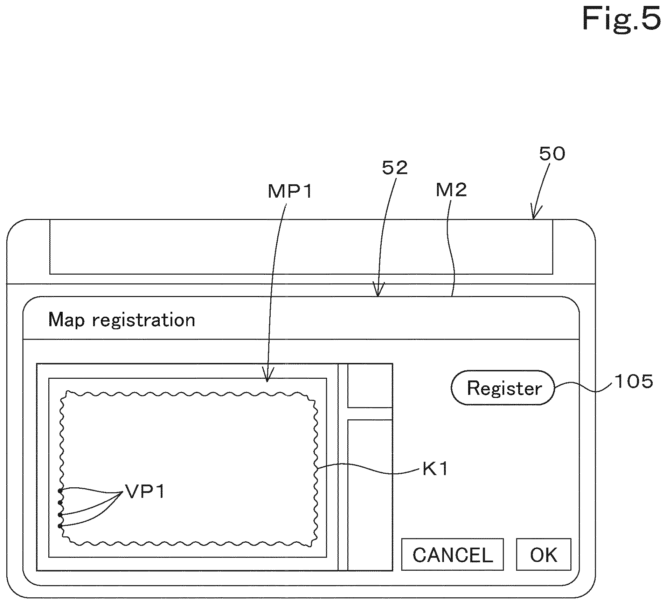

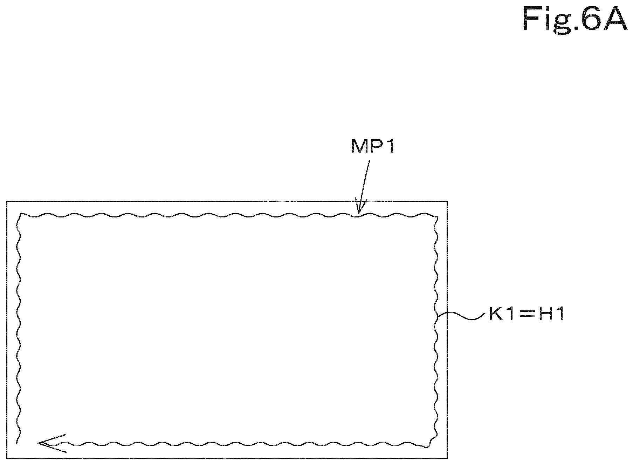

The following description discusses, in detail, a screen displayed on the display unit 52 of the display device 50 and registration of a map by the map registration unit 51b. As illustrated in FIG. 5, upon predetermined operation on the display device 50, the display device 50 displays a map registration screen M2 on the display unit 52. The map registration screen M2 displays a map MP1 including an agricultural field, machine body position(s) VP1 of the working machine 1, and agricultural field identification information such as the name of the agricultural filed, the identifier of the agricultural field, and/or the like. The map MP1 is associated with position information such as latitude and longitude in addition to image data representing the agricultural field. Once the working machine 1 has entered the agricultural field and traveled around the agricultural field, the map registration screen M2 displays the current machine body position(s) VP1 detected by the positioning device 40 when the working machine 1 was traveling around. Once the working machine 1 has traveled around the agricultural field and a register button 105 displayed on the map registration screen M2 has been operated, as illustrated in FIG. 6A, the map registration unit 51b uses, as an outline (outer edge) H1 of the agricultural field, a traveled path K1 obtained from a plurality of machine body positions VP1 obtained when the working machine 1 was traveling around the agricultural field, and registers an agricultural field map MP defined by the outline H1 together with the agricultural field identification information.

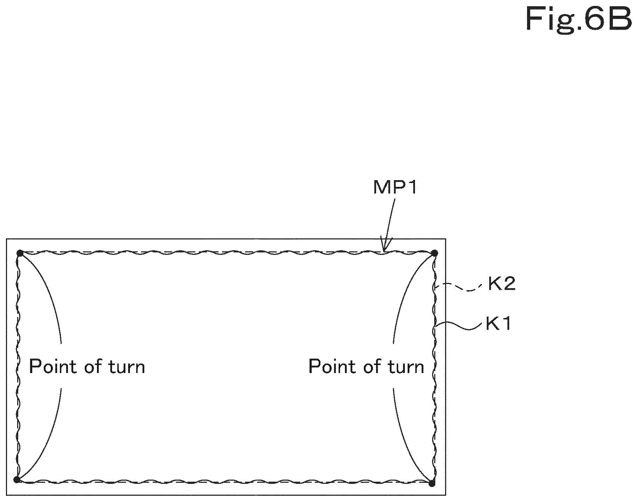

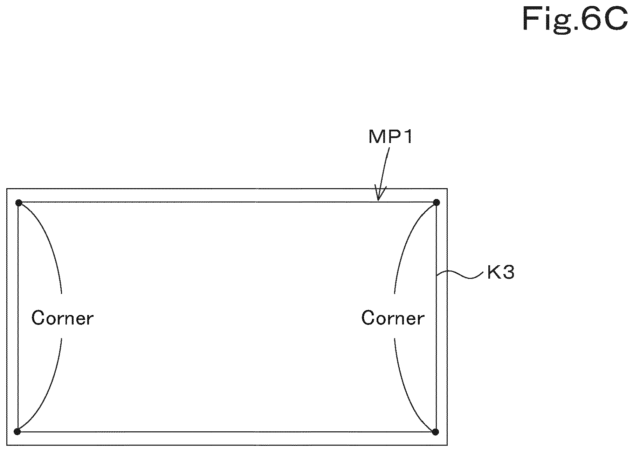

Note that the map registration unit 51b may register, as the outline H1 (agricultural field map MP) of the agricultural field, an outline K2 connecting points of turn calculated from the traveled path indicated by the machine body positions VP1 as illustrated in FIG. 6B, and may register, as the outline H1 (agricultural field map MP), an outline K3 connecting corners of an agricultural field designated by a driver or the like using a switch or the like on the working machine 1 when the working machine 1 travels around as illustrated in FIG. 6C. The above-described methods of registering the agricultural field are examples, and do not imply any limitation. The outline of the agricultural field, i.e., the agricultural field map MP, may be data indicated by positions (latitude, longitude), may be data indicated by a coordination system (X axis, Y axis), and may be data indicated in some other manner.

The storage unit 53 stores the agricultural field map MP which indicates the outline (contour) registered by the map registration unit 51b. That is, the storage unit 53 stores the agricultural field map MP, i.e., data indicating the outline of the agricultural field (data to represent a certain agricultural field).

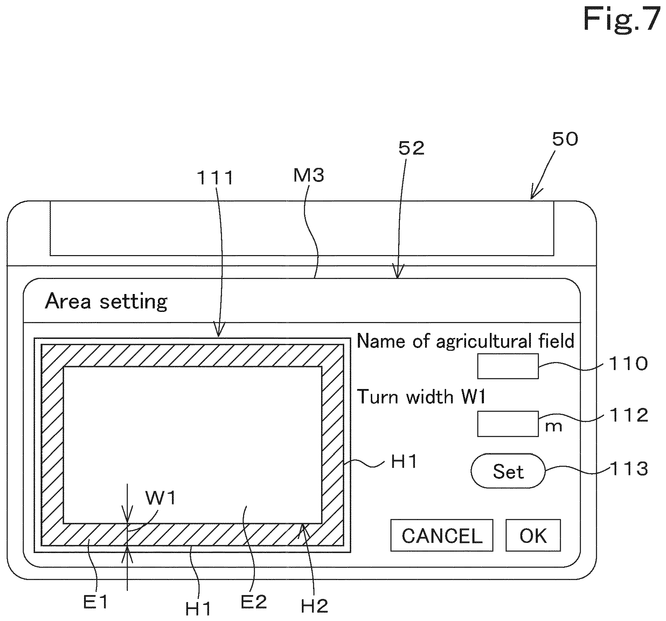

The following description discusses, in detail, a screen displayed on the display unit 52 of the display device 50, the acquisition of the width of the turn area E1 by the turn width acquisition unit 51c, and setting of the work area E2 by the area setting unit 51d. As illustrated in FIG. 7, upon predetermined operation on the display device 50 by an operator (driver), the display device 50 displays an area setting screen M3 on the display unit 52. The area setting screen M3 includes an agricultural field input section 110, an agricultural field display section 111, a turn width input section 112, and a turn setting button 113. The agricultural field input section 110 is for input of agricultural field identification information such as the name of an agricultural field and the identifier of the agricultural field. The agricultural field display section 111 displays an agricultural field map MP representing a predetermined agricultural field corresponding to the agricultural field identification information inputted into the agricultural field input section 110. That is, the control unit 51 sends a request for an agricultural field map MP corresponding to the agricultural field identification information inputted into the agricultural field input section 110 to the storage unit 53, and causes the agricultural field map MP sent from the storage unit 53 to be displayed in the agricultural field display section 111.

The turn width input section 112 is for input of the turn width W1 of a predetermined agricultural field corresponding to the agricultural field identification information inputted into the agricultural field input section 110. The turn setting button 113 is a piece of graphics via which operation to confirm the turn width W1 inputted into the turn width input section 112, i.e., confirm the reception of input of the turn width W1, can be performed. Thus, upon input of the turn width W1 into the turn width input section 112 and operation of the turn setting button 113, the turn width acquisition unit 51c acquires the turn width W1 inputted into the turn width input section 112.

Furthermore, once the turn setting button 113 has been selected and the turn width acquisition unit 51c has acquired the turn width W1 inputted into the turn width input section 112, the area setting unit 51d causes the work area E2 excluding the turn area E1 to be displayed on the agricultural field map MP displayed in the agricultural field display section 111. For example, the area setting unit 51d sets, as the work area E2, an area defined by an outline H2 that is offset inward from the outline H1 of the agricultural field map MP by the turn width W1 on the basis of the turn width W1 acquired by the turn width acquisition unit 51c. Note that the work area E2 may be set on the agricultural field map MP by designating the position of the outline of the work area E2 using a pointer or the like on the agricultural field map MP displayed in the agricultural field display section 111 of the area setting screen M3.

The storage unit 53 stores data of the agricultural field map MP on which the work area E2 is set, i.e., data indicating the position of the work area E2 on the agricultural field map MP.

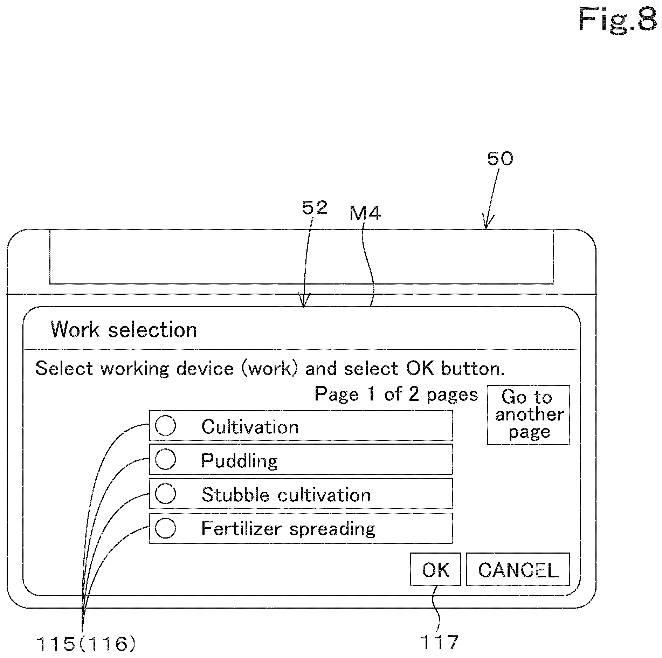

The following description discusses, in detail, a screen displayed on the display unit 52 of the display device 50 and the acquisition of the working device 2 or the work category or the like of the working device 2 by the work acquisition unit 51e. As illustrated in FIG. 8, upon predetermined operation on the display device 50 by an operator (driver), the display device 50 displays a work selection screen M4 on the display unit 52. The work selection screen M4 includes a selection section 115. The selection section 115 enables operation of selection among a plurality of working devices 2 that can be attached to the working machine 1, i.e., operation to input identification information for identification of a working device 2 such as the name, model number, product number, and/or the like of the working device 2, work content of the working device 2 or the category thereof, and/or the like.

As illustrated in FIG. 8, the selection section 115 includes, for example, a plurality of selection members 116, and the plurality of selection members 116 are pieces of graphics associated with pieces of identification information for identification of working devices 2 such as the names, model numbers, or product numbers of the working devices 2 and/or the content of work done by the working devices 2 or categories thereof. In the present embodiment, as illustrated in FIG. 8, the selection members 116 are associated with the work categories of the working devices 2, and the work categories associated with the plurality of selection members 116 at least include "fertilizer spreading", and, for example, the plurality of selection members 116 are associated with "cultivation", "puddling", "stubble cultivation", and "fertilizer spreading", respectively. Thus, once operation to select any of the plurality of selection members 116 has been performed, the work category of a working device 2 is selected. Note that the work categories associated with the plurality of selection members 116 may include, for example, "agricultural chemical spreading", "watering", "seeding", "reaping", and/or the like, and the categories are not limited to those described above.

Furthermore, as illustrated in FIG. 8, the work selection screen M4 includes a selection confirmation button 117. The selection confirmation button 117 is a piece of graphics which is operable. By selecting a work category of a working device 2 by operating one of the selection members 116 and operating the selection confirmation button 117, the selection of the work category of the working device 2 by operation of the selection member 116 is confirmed. Thus, once the selection confirmation button 117 has been operated, the work acquisition unit 51e acquires, from the storage unit 53, the work category associated with the selection member 116 which has been selected.

Note that, although the selection members 116 are associated with work categories and the work acquisition unit 51e acquires a work category from the storage unit 53 in the present embodiment, the selection members 116 need only be associated with at least one of the identification information for identification of the working devices 2 such as the names, model numbers, or product numbers of the working devices 2, work content of the work devices 2, and the like, and the work acquisition unit 51e need only be capable of acquiring information which makes it possible to identify the working devices 2. The work acquisition unit 51e may acquire names or product numbers instead of the work categories.

The following description discusses, in detail, a screen displayed on the display unit 52 of the display device 50, the acquisition of the first work dimension w1 by the work dimension acquisition unit 51f, the acquisition of the second work dimension w2 of the working device 2 by the range acquisition unit 51g, the preparation of the planned travel route L by the route preparation unit 51h, and setting of work start and work end for the working device 2 by the work setting unit 51i.

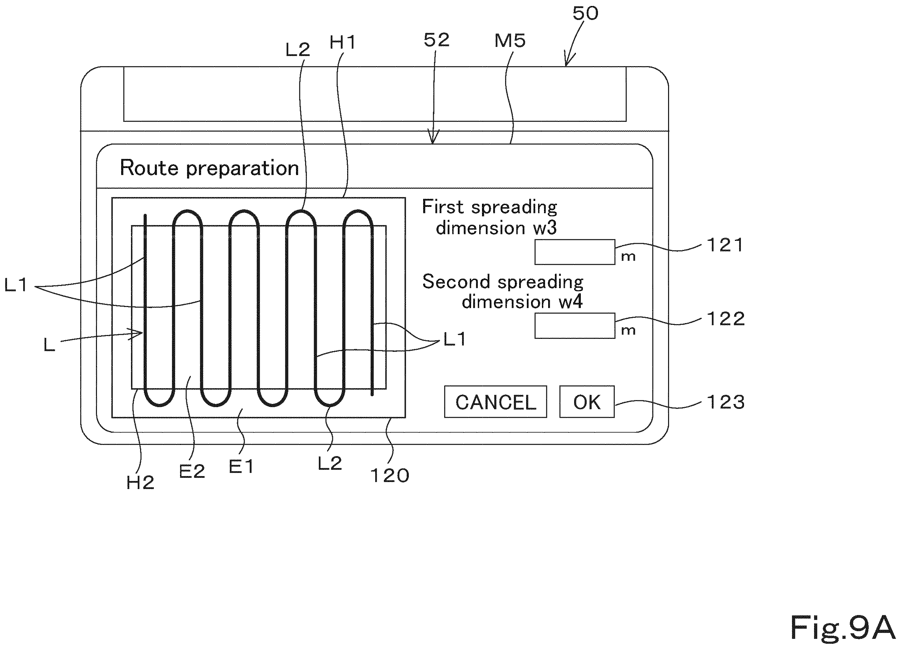

In the case where the operator (driver) has performed operation to select a working device 2 on the work selection screen M4 and the working device 2 acquired by the work acquisition unit 51e is a spreader that does fertilizer spreading work, agricultural chemical spreading work, water spreading work, or the like, the display device 50 displays a first settings screen M5 on the display unit 52 of the display device 50 as illustrated in FIG. 9A. The first settings screen M5 is an input screen for input of at least the second spreading dimension w4, and, on the basis of the inputted second spreading dimension w4, the work start position(s) ST*n* and the work end position(s) ET*n* can be set at different positions. Furthermore, in the first settings screen M5, the first spreading dimension w3 can be inputted, and the planned travel route L can be set in the work area E2 on the basis of the inputted first spreading dimension w3. The first settings screen M5 includes a route display section 120 in which a planned travel route L is displayed, a first dimension input section 121, a second dimension input section 122, and a second input confirmation button 123.

The first dimension input section 121 is for input of the first spreading dimension w3 corresponding to the spreader which has been selected on the work selection screen M4. The second dimension input section 122 is for input of the second spreading dimension w4 corresponding to the spreader which has been selected on the work selection screen M4. The first spreading dimension w3 and the second spreading dimension w4 are each inputted by operating a predetermined operation item displayed on the first settings screen M5, an operation switch on the display device 50, and/or the like.

The second input confirmation button 123 is a piece of graphics via which operation to confirm the first spreading dimension w3 inputted into the first dimension input section 121 and the second spreading dimension w4 inputted into the second dimension input section 122, that is, confirm the reception of input of the first spreading dimension w3 and the second spreading dimension w4, can be performed. Thus, once the first spreading dimension w3 has been inputted into the first dimension input section 121, the second spreading dimension w4 has been inputted into the second dimension input section 122, and the second input confirmation button 123 has been selected, the storage unit 53 stores the first spreading dimension w3 and the second spreading dimension w4 such that the first spreading dimension w3 and the second spreading dimension w4 are associated with the spreader. The work dimension acquisition unit 51f acquires the first spreading dimension w3 from the storage unit 53 on the basis of information acquired by the work acquisition unit 51e. Furthermore, the range acquisition unit 51g acquires the second spreading dimension w4 from the storage unit 53 on the basis of information acquired by the work acquisition unit 51e.

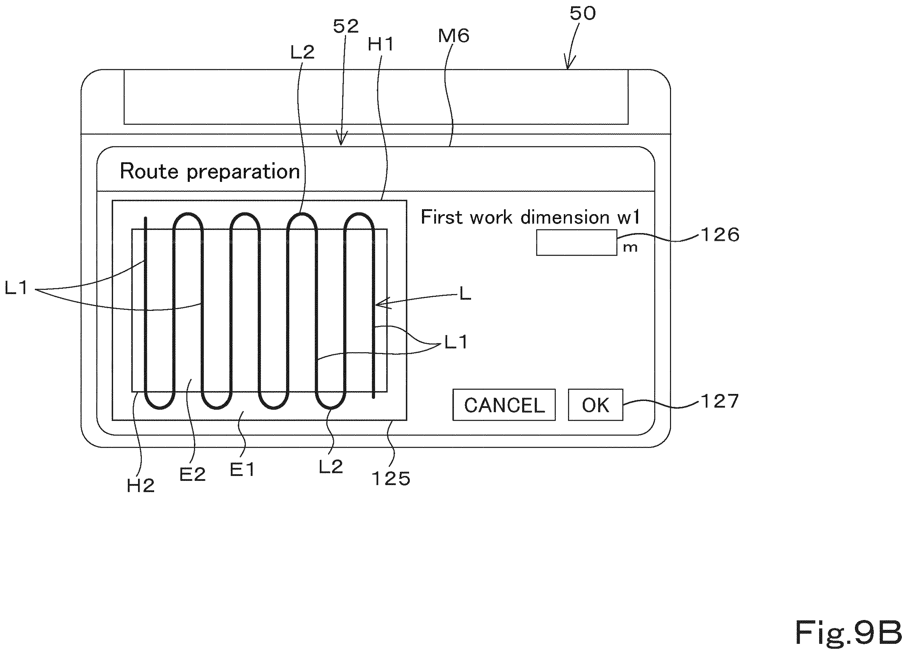

In the case where the operator (driver) has performed operation to select a working device 2 on the work selection screen M4 and the working device 2 acquired by the work acquisition unit 51e is a working device 2 other than spreaders such as a fertilizer spreader, an agricultural chemical spreader, and a water spreader, as illustrated in FIG. 9B, the display device 50 displays a second settings screen M6 on the display unit 52. The second settings screen M6 is a screen which is for input of the first work dimension w1 and in which a planned travel route L can be set in the work area E2 on the basis of the inputted first work dimension w1. The second settings screen M6 includes a route display section 125 in which the planned travel route L is displayed, a third dimension input section 126, and a third input confirmation button 127.

The third dimension input section 126 is for input of the first work dimension w1 corresponding to the working device 2 which has been selected on the work selection screen M4. The first work dimension w1 is inputted by operating a predetermined operation item displayed on the second settings screen M6, an operation switch on the display device 50, and/or the like.

The third input confirmation button 127 is a piece of graphics via which operation to confirm the first work dimension w1 inputted into the third dimension input section 126, i.e., confirm the reception of input of the first work dimension w1, can be performed. Thus, upon input of the first work dimension w1 into the third dimension input section 126 and selection of the third input confirmation button 127, the storage unit 53 stores the first work dimension w1 such that the first work dimension w1 is associated with the working device 2. The work dimension acquisition unit 51f acquires the first work dimension w1 from the storage unit 53 on the basis of information acquired by the work acquisition unit 51e. Furthermore, the range acquisition unit 51g acquires a pre-set second work dimension w2 from the storage unit 53 on the basis of information acquired by the work acquisition unit 51e.

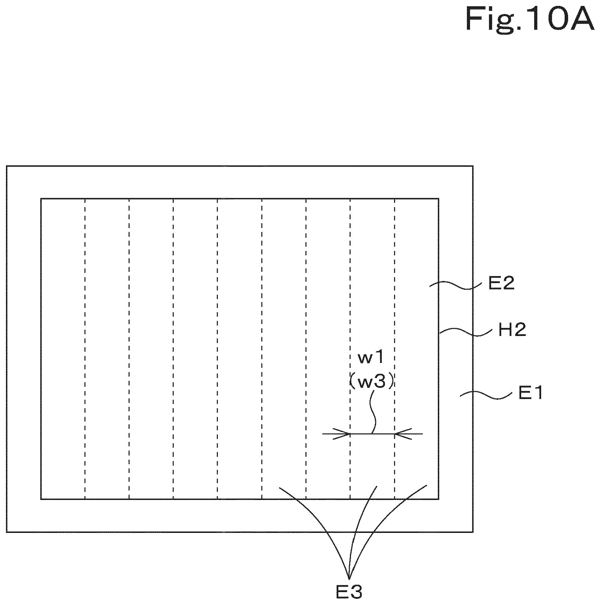

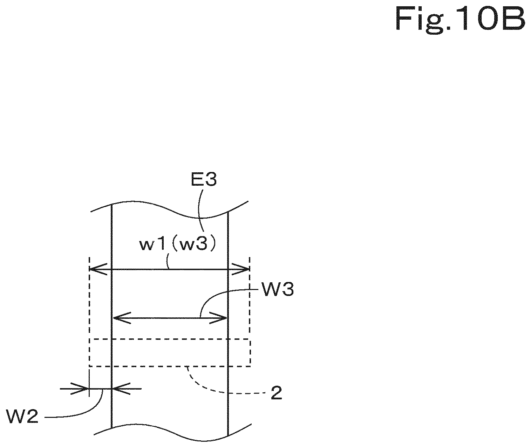

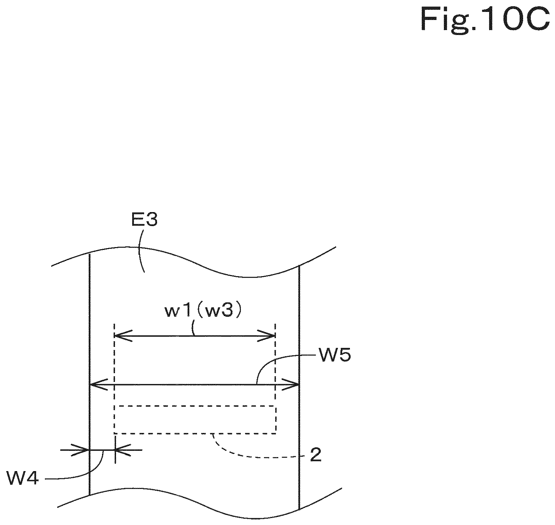

Once the work dimension acquisition unit 51f has acquired the first work dimension w1 (the first spreading dimension w3 when the working device 2 is a spreader), the route preparation unit 51h divides the work area E2 into vertically or horizontally arranged areas each having the first work dimension w1 to prepare, in the work area E2, a plurality of unit work segments E3 in each of which work is to be done by the working device 2, as illustrated in FIG. 10A. That is, the route preparation unit 51h prepares a plurality of unit work segments E3 each of which has a width equal to the first work dimension w1 in the work area E2. Note that, as illustrated in FIG. 10B, the route preparation unit 51h may prepare, in the work area E2, a plurality of unit work segments E3 each having a width W3 obtained by excluding overlapping width(s) W2 from the first work dimension w1. The overlapping width W2 can be inputted on a predetermined screen displayed on the display unit 52. That is, the route preparation unit 51h sets, as each unit work segment E3, the smallest unit area in which work is done against the agricultural field by the working device 2 when the machine body 3 with the working device 2 linked thereto is caused to travel. Furthermore, as illustrated in FIG. 10C, the route preparation unit 51h may prepare, in the work area E2, a plurality of unit work segments E3 each having a width W5 obtained by adding underlapping width(s) W4 to the first work dimension w1. The underlapping width W4 can be inputted on a predetermined screen displayed on the display unit 52.

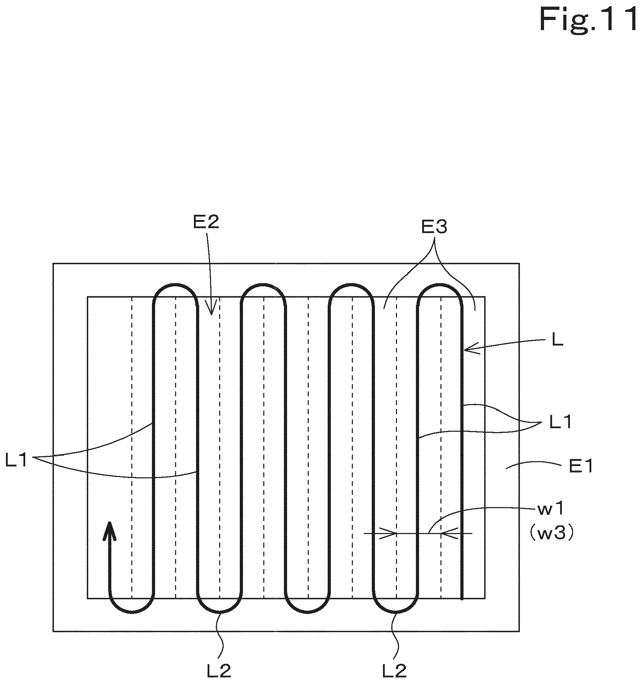

As illustrated in FIG. 11, the route preparation unit 51h prepares straight sections L1 on which the machine body 3 travels straight for the respective unit work segments E3 of the agricultural field map MP. That is, for example, the route preparation unit 51h prepares, in the widthwise middle portion of each unit work segment E3, a straight section L1 in the form of a continuous straight line which connects opposite ends of the unit work segment E3 in the lengthwise direction and which extends into, over, or across the turn area E1, the work area E2, and the boundary X1. Furthermore, the route preparation unit 51h prepares turn section(s) L2 connecting end portions of adjacent straight sections L1. That is, the route preparation unit 51h prepares the turn section(s) L2 at least in the turn area E1.

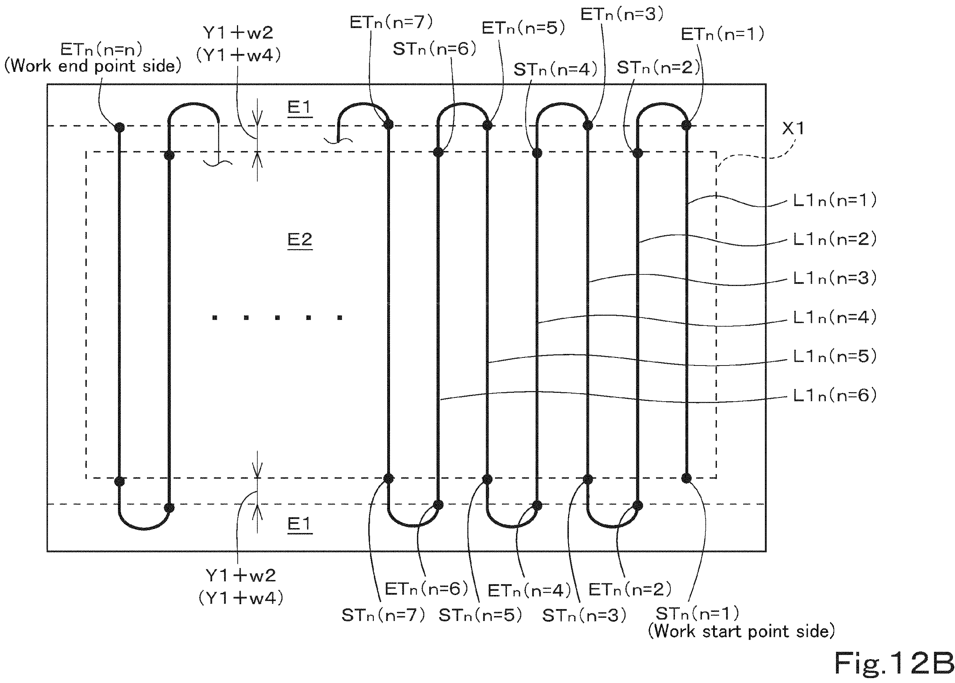

Furthermore, once the range acquisition unit 51g has acquired the second work dimension w2 (the second spreading dimension w4 when the working device 2 is a spreader), the work setting unit 51i sets work start and work end for the working device 2. As illustrated in FIG. 12B, the work setting unit 51i sets work start position(s) ST*n* and work end position(s) ET*n* on the basis of the boundary X1 between the work area E2 and the turn area E1 and the second spreading dimension w4. The work setting unit 51i sets the work start position(s) ST*n* and the work end position(s) ET*n* on the planned travel route L.

Specifically, when the working device 2 is a spreader, the work setting unit 51i sets a work start position ST*n* and a work end position ET*n* which are adjacent to each other so that the work start position ST*n* and the work end position ET*n* are at different positions in the front-rear direction of the machine body 3 (working device 2) according to at least the second spreading dimension w4. In the present embodiment, the work setting unit 51i sets the work start position ST*n* and the work end position ET*n* so that the work start position ST*n* and the work end position ET*n* are at different positions on the basis of the reference distance Y1 acquired by the information acquisition unit 51a and the second work dimension w2 (second spreading dimension w4) acquired by the range acquisition unit 51g.

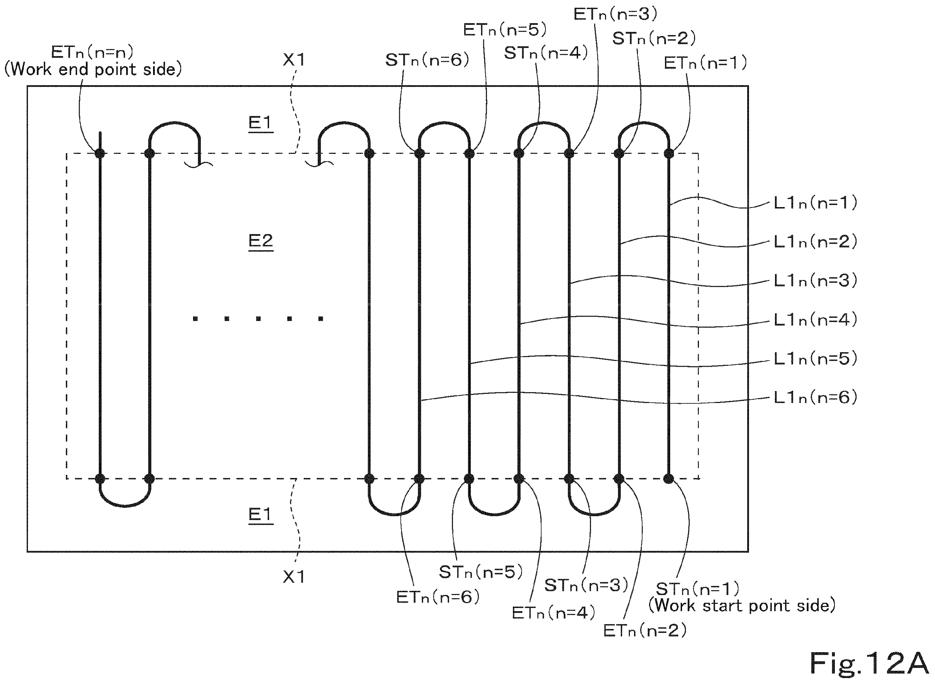

Specifically, as illustrated in FIG. 12A, on the planned travel route L, assuming that each straight section L1 is referred to as a straight section *L1n* (*n* = 1, 2, ... and *n*, where 1 means a work start point side and *n* means a work end point side), the work setting unit 51i sets one of opposite ends of each straight section L1n where *n* is an even number (*n =* 2, 4, 6 ... and so on) (i.e., the end on the same side as the work end point) as a work start position *STn (n =* 2, 4, 6 ... and so on). Furthermore, the work setting unit 51i sets one of opposite ends of each straight section L1*n* where *n* is an odd number *(n =* 1, 3, 5 ... and so on) (the end that is on the same side as the work start point) as a work start position *STn (n =* 1, 3, 5 ... and so on).

As illustrated in FIG. 12A, the work setting unit 51i sets the other of the opposite ends of each straight section L1*n* where *n* is an odd number (*n =* 1, 3, 5 ... and so on) (the end that is on the same side as the work end point) as a work end position ET*n* (n = 1, 3, 5 ... and so on). Furthermore, the work setting unit 51i sets the other of the opposite ends of each straight section L1*n* where *n* is an even number (*n =* 2, 4, 6 ... and so on) (the end that is on the same side as the work start point) as a work end position ET*n* (*n* = 2, 4, 6 ... and so on).

As illustrated in FIG. 12B, the work setting unit 51i shifts the work end positions *ETn* (*n =* 2, 4, 6 ... and so on) that are on the same side as the work start point in FIG. 12A into the turn area E1 by at least the sum of the reference distance Y1 and the second work dimension w2 (Y1 + w2). The route preparation unit 51h extends the straight section L1*n* (*n* = 2, 4, 6 ... and so on) that corresponds to each shifted work end position ETn (*n* = 2, 4, 6 ... and so on) to the shifted work end position ET*n* (*n* = 2, 4, 6 ... and so on).

Furthermore, as illustrated in FIG. 12B, the work setting unit 51i shifts the work end positions ET*n* (*n* = 1, 3, 5 ... and so on) that are on the same side as the work end point in FIG. 12A into the turn area E1 by at least the sum of the reference distance Y1 and the second work dimension w2 (Y1 + w2). The route preparation unit 51h extends the straight section L1*n (n =* 1, 3, 5 ... and so on) that corresponds to each shifted work end position ETn (*n =* 1, 3, 5 ... and so on) to the shifted work end position ET*n* (*n* = 1, 3, 5 ... and so on).

Note that, although the work setting unit 51i in the present embodiment sets the work start position(s) STn and the work end position(s) ET*n* so that the work start position(s) ST*n* and the work end position(s) ET*n* are at different positions on the basis of the reference distance Y1 acquired by the information acquisition unit 51a and the second work dimension w2 acquired by the range acquisition unit 51g, the work setting unit 51i need only set the work start position(s) ST*n* and the work end position(s) ET*n* so that the work start position(s) ST*n* and the work end position(s) ET*n* are at different positions based at least on the second spreading dimension w4 acquired by the range acquisition unit 51g, and a method thereof is not limited to that described above.

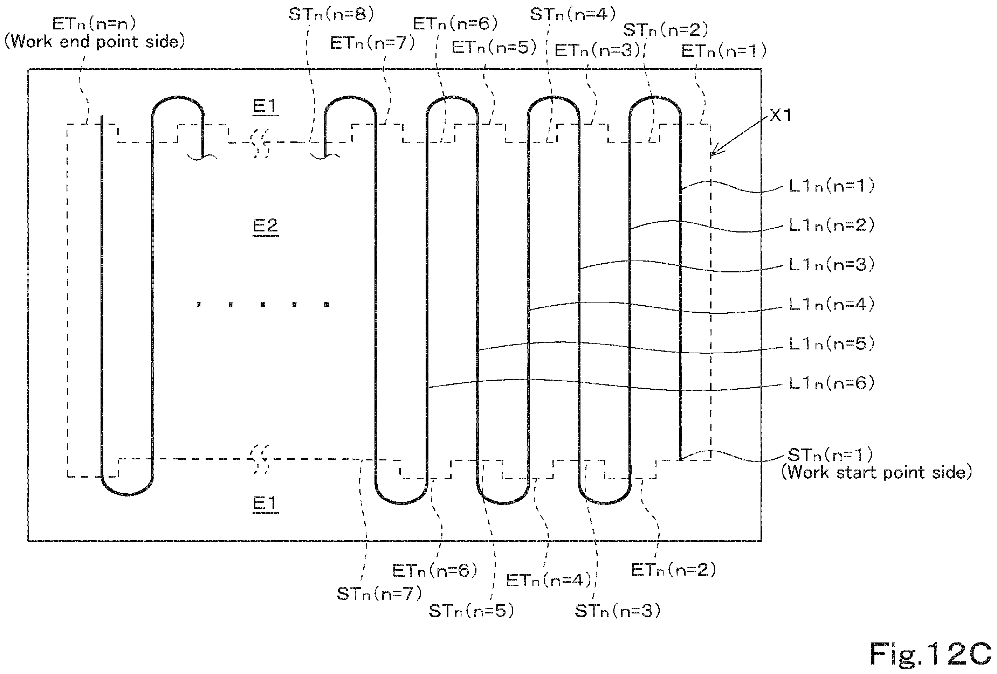

Furthermore, although the work start positions ST*n* and the work end positions ET*n* are set on the planned travel route L (straight sections L1*n*) with the turn area E1 and the work area E2 kept unchanged, the work setting unit 51i may shift ends of the unit work segments E3 of the work area E2 into the turn area E1 by at least the second work dimension w2 and set the work start positions STn and the work end positions ETn on the boundary X1 between the work area E2 and the turn area E1 (see FIG. 12C).

The following description discusses automatic travel in detail. As illustrated in FIG. 1, the working machine 1 includes a control device 60. The control device 60 is a device to control the traveling system of the working machine 1, control the working system of the working machine 1, and/or the like. The control device 60 has connected thereto an operation changeover switch 65. The operation changeover switch 65 is a switch capable of being switched between ON and OFF. When the operation changeover switch 65 is in the ON state, the control device 60 can be set to an automatic travel mode, and when the operation changeover switch 65 is in the OFF state, the control device 60 can be set to a manual operation mode.

The control device 60 includes an automatic travel control unit 63. The automatic travel control unit 63 is composed of electric/electronic circuit(s) provided in the control device 60, program(s) stored in a CPU and/or the like in the control device 60, and/or the like.

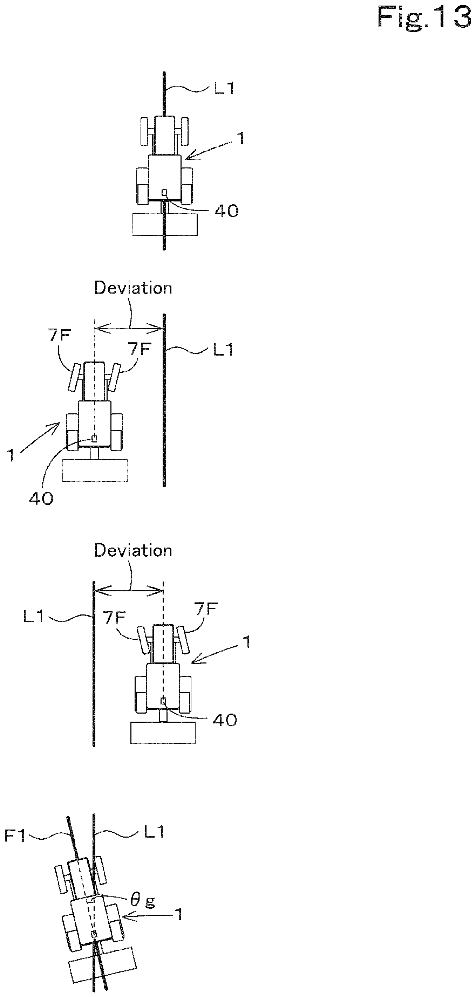

The automatic travel control unit 63 controls automatic travel of the machine body 3. The automatic travel control unit 63 starts the automatic travel when the working machine 1 is in an automatic travel mode. As illustrated in FIG. 13, when the working machine 1 is performing automatic travel, if the deviation between the machine body position VP1 and the planned travel route L is less than a threshold, the automatic travel control unit 63 maintains the angle of rotation of the steering shaft (rotation shaft) 31. If the deviation between the machine body position VP1 and the planned travel route L is equal to or greater than the threshold and the working machine 1 is positioned leftward of the planned travel route L, the automatic travel control unit 63 causes the steering shaft 31 to rotate so that the working machine 1 is steered right. If the deviation between the machine body position VP1 and the planned travel route L is equal to or greater than the threshold and the working machine 1 is positioned rightward of the planned travel route L, the automatic travel control unit 63 causes the steering shaft 31 to rotate so that the working machine 1 is steered left.

Note that, although the angle of steering by the steering unit 29 is changed on the basis of the deviation between the machine body position VP1 and the planned travel route L in the above-described embodiment, the automatic travel control unit 63 may, in the case where the direction of the planned travel route L and the travel direction F1 of the working machine 1 (machine body 3) (machine body heading direction) differ from each other, i.e., in the case where an angle of the machine body heading direction F1 to the planned travel route L is equal to or greater than a threshold, set the angle of steering so that the angle is zero (the machine body heading direction F1 matches the direction of the planned travel route L). The automatic travel control unit 63 may set the final angle of steering for the automatic travel on the basis of an angle of steering determined based on the deviation (deviation in position) and an angle of steering determined based on the direction (deviation in direction) F1. Settings of the angle of steering in automatic travel in the above-described embodiment are examples, and do not imply any limitation.

Note that, in the case where the planned travel route L is associated with vehicle speed, the automatic travel control unit 63 automatically changes the speed stage of the transmission 5, the speed of rotation of the prime mover 4, and/or the like so that the current speed of the working machine 1 matches the vehicle speed that corresponds to the planned travel route L.

The control device 60 controls the working device 2 according to the work start position(s) ST*n* and the work end position(s) ET*n* set by the work setting unit 51i. Specifically, the automatic travel control unit 63 of the control device 60 controls the working device 2 on the basis of the work start position(s) ST*n* and the work end position(s) ET*n* set by the work setting unit 51i, the position(s) of the machine body 3 measured by the positioning device 40, and the reference distance Y1. For example, the automatic travel control unit 63 starts driving the working device 2 by outputting a start signal to a driving device (drive motor) of the working device 2, and stops the driving by outputting a stop signal.

The automatic travel control unit 63 starts driving the working device 2 (causes the working device 2 to start doing work) when, under the conditions in which the working machine 1 is traveling while performing automatic travel at least along a turn section L2, the working device 2 has passed through a work start position ST*n*.

On the contrary, the automatic travel control unit 63 stops driving the working device 2 (causes the working device 2 to stop doing the work) when, under the conditions in which the working machine 1 is traveling while performing automatic travel at least along the turn section L2, the working device 2 has passed through a work end position ETn.

Note that the control device 60 need only cause the working device 2 to start doing work when the working device 2 linked to the linkage has passed through a work start position ST*n* and causes the working device 2 to stop doing the work when the working device 2 has passed through a work end position ETn, and a method of such control is not limited to that described above.

In the above-described embodiment, the control device 60 (automatic travel control unit 63) starts the driving by outputting a start signal to a drive motor and stops the driving by outputting a stop signal. However, the control device 60 need only be capable of controlling starting and stopping of the driving of the working device 2, and may control the starting and stopping of the driving of the driving device by, for example, controlling a PTO clutch 155 (which is capable of switching between a connected state in which power from the PTO shaft is transmitted to the working device 2 and a disconnected state in which the power is not transmitted to the working device 2) to switch the connected state to the disconnected state. Any method of controlling the starting and stopping of the driving of the working device 2 may be used.

A working machine 1 as has been described includes a machine body 3, a linkage capable of linking a working device 2 to the machine body 3, a spreader being one of types of the working device 2, an automatic travel control unit 63 to cause the machine body 3 to perform automatic travel according to a planned travel route L, a range acquisition unit 51g to acquire a spreading work range w4 that is a range where spreading work is done by the spreader in a front-rear direction thereof, and a work setting unit 51i to set a work start position ST*n* and a work end position ET*n* for the spreader so that the work start position ST*n* and the work end position ET*n* are at different positions according to the spreading work range w4 acquired by the range acquisition unit 51g. The configuration makes it possible to change the position at which work is started and the position at which the work is ended according to the spreading work range w4 that is a range where spreading work is done by the spreader in the front-rear direction. This makes it possible to do work at intended positions even in cases of a fertilizer spreader, an agricultural chemical spreader, a water spreader, or the like which differ relatively greatly in front-rear work range w2 compared to other working devices 2, and possible to prevent or reduce unevenness of fertilizer spreading and reduce unplowed land.

The working machine 1 further includes an input device to receive input of the spreading work range w4 such that the spreading work range w4 is associated with the spreader, wherein the range acquisition unit 51g acquires the spreading work range w4 received by the input device. With the configuration, by inputting the spreading work range w4 into the input device, it is possible to adjust the spreading work range w4 as desired. This makes it possible to improve the usefulness of the working machine 1.

The working machine 1 further includes a storage unit 53 to store the spreading work range w4 received by the input device, wherein the input device is a display device 50 to display an input screen M5 to receive input of the spreading work range w4, and the storage unit 53 stores the spreading work range w4 inputted into and received by the input screen M5 and the spreader corresponding to the spreading work range w4 such that the spreading work range w4 and the spreader are associated with each other. With the configuration, the storage unit 53 stores the spreading work range w4 and the spreader such that the spreading work range w4 and the spreader are associated with each other, and therefore the working machine 1 is capable of reading out the spreading work range w4 corresponding to the spreader. This eliminates the need for inputting the spreading work range w4 by operating the input device every time work is to be done.

The working machine 1 further includes a storage unit 53 to store the spreading work range w4 received by the input device, wherein the storage unit 53 stores another type of the working device 2 other than the spreader and a pre-set work range w2 such that the other type of the working device 2 and the pre-set work range w2 are associated with each other, the range acquisition unit 51g acquires, if the working device 2 linked to the linkage is the spreader, the spreading work range w4 inputted into and received by the input device and associated with the spreader from the storage unit 53, and acquires, if the working device 2 linked to the linkage is the other type of the working device 2 other than the spreader, the work range w2 from the storage unit 53, and the work setting unit 51i sets the work start position ST*n* and the work end position ET*n* for the working device 2 linked to the linkage so that the work start position ST*n* and the work end position ET*n* are at different positions according to the spreading work range w4 or the work range w2 acquired by the range acquisition unit 51g. With the configuration, the work setting unit 51i is capable of, if the working device 2 is not a spreader, setting the work start position ST*n* and the work end position ET*n* according to a predetermined work range w2. Thus, if the working device 2 is other than working devices 2 such as a fertilizer spreader, an agricultural chemical spreader and a water spreader which greatly vary in spreading work range w4 (work range w2) depending on the type of work or the type of working machine 1, the work start position ST*n* and the work end position ET*n* are set according to the pre-set work range w2. As such, if the working device 2 is not a spreader such as a fertilizer spreader, an agricultural chemical spreader, or a water spreader, the input device does not need to be operated, making it possible to improve efficiency and improve usability of the working machine 1.

The working machine 1 further includes a control device 60 to control the working device 2 linked to the linkage according to the work start position ST*n* and the work end position ET*n* set by the work setting unit 51i, wherein the control device 60 causes the working device 2 linked to the linkage to start doing work when the working device 2 has passed through the work start position ST*n* and causes the working device 2 to stop doing the work when the working device 2 has passed through the work end position ETn. With the configuration, the working device 2 starts doing work at the work start position ST*n* set by the work setting unit 51i, and the working device 2 ends the work at the work end position ET*n* set by the work setting unit 51i, making it possible for the working machine 1 to do work at intended places.

The working machine 1 further includes a route preparation unit 51h to prepare the planned travel route L, wherein the work setting unit 51i sets, according to the working device 2 linked to the linkage, the work start position ST*n* and the work end position ET*n* for the working device 2 on the planned travel route L. With this, since the work start position *STn* and the work end position ET*n* are set on the planned travel route L and therefore work is started and ended based on the position of the working machine 1, it is easy to cause the working machine 1 to travel and the working device 2 to do work in a linked manner, making it possible for the working machine 1 to do work more efficiently.

### [DESCRIPTION OF THE REFERENCE NUMERAL]

- 1: Working machine
- 2: Working device
- 3: Machine body
- 50: Display device
- 51g: Range acquisition unit
- 51h: Route preparation unit
- 51i: Work setting unit
- 53: Storage unit
- 60: Control device
- 63: Automatic travel control unit
- ETn: Work end position
- L: Planned travel route
- M5: First settings screen (input screen)
- w2: Second work dimension (front-rear work range)
- w4: Second spreading dimension (front-rear spreading work range)

## Claims

1. A working machine (1) comprising:
a machine body (3);
a linkage (8) capable of linking a working device (2) to the machine body (3); and
an automatic travel control unit (63) to cause the machine body (3) to perform automatic travel according to a planned travel route (L) and, when the working machine (1) is provided with the working device (2) linked to the machine body (3) via the linkage (8), control the working device (2), wherein
the planned travel route (L) is set in a field map (MP) including a work area (E2) for work with the working machine (1) and a turn area (E1) for turn of the working machine (1), the turn area (E1) including opposite parts on opposite sides of the work area (E2), and
the planned travel route (L) includes
at least two adjacent straight sections (L1n) extending across the work area (E2) between the opposite parts of the turn area (E1),
at least one turn section (L2n) extending in at least one of the opposite parts of the turn area (E1) to join respective ends of the at least two adjacent straight sections (L1n) to each other,
a work start position (STn) defining one end of each of the at least two adjacent straight sections (L1n) on each of the opposite sides of the work area (E2), and
a work end position (ETn) defining another end of each of the at least two adjacent straight sections (L1n) on each of the opposite sides of the work area (E2), so that the work start position (STn) defining the end of one of the at least two adjacent straight sections (L1n) and the work end position (ETn) defining the end of another of the at least two adjacent straight sections (L1n) are adjacent to each other on each of the opposite sides of the work area (E2),
**characterized in that** the working machine (1) comprises:
a range acquisition unit (51g) to, when the working device (2) linked via the linkage (8) to the machine body (3) is a spreader, acquire a spreading work range that is a spread range of a matter spread by the spreader in a front-rear direction of the spreader; and
a work setting unit (51i) to set the work start position (STn) and the work end position (ETn) defining the ends of each of the at least two straight sections (L1n) on the opposite sides of the work area (E2) so that, when the working device (2) linked via the linkage (8) to the machine body (3) is the spreader, the work setting unit (51i) determines, between the work start position (STn) and the work end position (ETn) adjacent to each other on either one or each of the opposite sides of the work area (E2), a positional difference in a front-rear direction of the working machine (1) when in the work start position (STn) or the work end position (ETn) according to the spreading work range acquired by the range acquisition unit (51g).

2. The working machine (1) according to claim 1, further comprising an input device to, when the working device (2) linked to the machine body (3) via the linkage (8) is the spreader, receive input of the spreading work range such that the inputted spreading work range is associated with the spreader, wherein
the range acquisition unit (51g) acquires the spreading work range received by the input device.

3. The working machine (1) according to claim 2, further comprising a storage unit (53) to store the spreading work range received by the input device, wherein:
the input device is a display device (50) to, when the working device (2) linked to the machine body (3) via the linkage (8) is the spreader, display an input screen (M5) to receive input of the spreading work range; and
the storage unit (53) stores the spreading work range inputted into and received by the input screen (M5) and information indicating the spreader corresponding to the spreading work range such that the spreading work range and the spreader are associated with each other.

4. The working machine according to claim 2, further comprising a storage unit (53) to store the spreading work range received by the input device, wherein:
the storage unit (53) stores information indicating at least one different working device other than the spreader and a pre-set work range such that the at least one different working device and the pre-set work range are associated with each other; and
when the working device (2) linked to the machine body (3) via the linkage (8) is the at least one different working device, the range acquisition unit (51g) acquires the pre-set work range from the storage unit (53), and the work setting unit (51i) sets the work start position (STn) and the work end position (ETn) defining the ends of each of the at least two straight sections (L1n) on the opposite sides of the work area (E2) so as to determine, between the work start position (STn) and the work end position (ETn) adjacent to each other on either one or each of the opposite sides of the work area (E2), a positional difference of a front-rear direction of the working machine (1) when in the work start position (STn) or the work end position (ETn) according to the pre-set work range acquired by the range acquisition unit (51g).

5. The working machine (1) according to claim 4, wherein the storage unit (53) stores information indicating the spreader corresponding to the spreading work range such that the spreading work range and the spreader are associated with each other.

6. The working machine (1) according to any one of claims 1 to 5, wherein, when the working machine (1) is provided with a working device (2) linked to the machine body (3) via the linkage (8), according to the planned travel route (L), the automatic travel control unit (63) causes the working machine (1), having traveled with the machine body (3) and worked with the working device (2) on a line corresponding to one of the at least two adjacent straight sections (L1n), to stop working with the working device (2) in a position corresponding to the work end position (ETn) defining the end of the one of the at least two adjacent straight sections (L1n), turn with the machine body (3) on a line corresponding to the at least turn section (L2n), and start working with the working device (2) in a position corresponding to the work start position (STn), thereby causing the working machine (1) to travel with the machine body (3) on a line corresponding to another of the at least two adjacent straight sections (L1n) while working with the working device (2).

7. The working machine (1) according to claim 6, wherein:
the automatic travel control unit (63) controls the working device (2) linked to the machine body (3) via the linkage (8) according to the work start position (STn) and the work end position (ETn) set by the work setting unit (51i); and
the automatic travel control unit (63) causes the working device (2) linked to the machine body (3) via the linkage (8) to start doing work when the working device (2) has passed through the position corresponding to the work start position (STn) and causes the working device (2) to stop doing the work when the working device (2) has passed through the position corresponding to the work end position (ETn).

8. The working machine (1) according to any one of claims 1 to 7, further comprising a route preparation unit (51h) to prepare the planned travel route (L), wherein
the work setting unit (51i) sets, on the planned travel route (L) prepared by the route preparation unit (51h), the work start position (STn) and the work end position (ETn) defining each of the at least two working travel lines (L1n) to correspond to the working device (2) linked to the machine body (3) via the linkage (8).

## Patentansprüche

1. Arbeitsmaschine (1), umfassend:
einen Maschinenkörper (3);
eine Verbindung (8), die zum Verbinden einer Arbeitsvorrichtung (2) mit dem Maschinenkörper (3) in der Lage ist; und
eine Steuereinheit (63) für eine automatische Fahrt, um den Maschinenkörper (3) zu veranlassen, die automatische Fahrt gemäß einer geplanten Fahrtroute (L) durchzuführen und, wenn die Arbeitsmaschine (1) mit der Arbeitsvorrichtung (2) bereitgestellt ist, die über die Verbindung (8) mit dem Maschinenkörper (3) verbunden ist, die Arbeitsvorrichtung (2) zu steuern, wobei
die geplante Fahrroute (L) in einer Feldkarte (MP), die eine Arbeitsfläche (E2) für eine Arbeit mit der Arbeitsmaschine (1) und eine Wendefläche (E1) für ein Wenden der Arbeitsmaschine (1) einschließt, eingestellt ist, wobei die Wendefläche (E1) gegenüberliegende Teile auf gegenüberliegenden Seiten der Arbeitsfläche (E2) einschließt, und
die geplante Fahrtroute (L) einschließt
mindestens zwei angrenzende gerade Abschnitte (L1n), die sich über die Arbeitsfläche (E2) zwischen den gegenüberliegenden Teilen der Wendefläche (E1) erstrecken,
mindestens einen Wendeabschnitt (L2n), der sich in mindestens einem der gegenüberliegenden Teile der Wendefläche (E1) erstreckt, um jeweilige Enden der mindestens zwei angrenzenden geraden Abschnitte (L1n) aneinander zu fügen,
eine Arbeitsanfangsposition (STn), die ein Ende jedes der mindestens zwei angrenzenden geraden Abschnitte (L1n) auf jeder der gegenüberliegenden Seiten der Arbeitsfläche (E2) definiert, und
eine Arbeitsendposition (ETn), die ein anderes Ende jedes der mindestens zwei angrenzenden geraden Abschnitte (L1n) auf jeder der gegenüberliegenden Seiten der Arbeitsfläche (E2) so definiert, dass die Arbeitsstartposition (STn), die das Ende eines der mindestens zwei angrenzenden geraden Abschnitte (L1n) definiert, und die Arbeitsendposition (ETn), die das Ende eines anderen der mindestens zwei angrenzenden geraden Abschnitte (L1n) definiert, auf jeder der gegenüberliegenden Seiten der Arbeitsfläche (E2) aneinander angrenzend sind,
**dadurch gekennzeichnet, dass** die Arbeitsmaschine (1) umfasst:
eine Bereichserfassungseinheit (51g), um, wenn die Arbeitsvorrichtung (2), die über die Verbindung (8) mit dem Maschinenkörper (3) verbunden ist, ein Streuer ist, einen Streuarbeitsbereich zu erfassen, der ein Streubereich einer Substanz, die durch den Streuer gestreut wird, in einer Vorne-Hinten-Richtung des Streuers ist; und
eine Arbeitseinstelleinheit (51i), um die Arbeitsstartposition (STn) und die Arbeitsendposition (ETn), die die Enden jedes der mindestens zwei geraden Abschnitte (L1n) auf den gegenüberliegenden Seiten der Arbeitsfläche (E2) definieren, so einzustellen, dass, wenn die Arbeitsvorrichtung (2), die über die Verbindung (8) mit dem Maschinenkörper (3) verbunden ist, der Streuer ist, die Arbeitseinstelleinheit (51i) zwischen der Arbeitsstartposition (STn) und der Arbeitsendposition (ETn), die auf einer oder jeder der gegenüberliegenden Seiten der Arbeitsfläche (E2) aneinander angrenzend sind, eine Positionsdifferenz in einer Vorne-Hinten-Richtung der Arbeitsmaschine (1) bestimmt, wenn sie sich in der Arbeitsstartposition (STn) oder der Arbeitsendposition (Etn) gemäß dem Streuarbeitsbereich, der durch die Bereichserfassungseinheit (51g) erfasst wird, befindet.

2. Arbeitsmaschine (1) nach Anspruch 1, ferner umfassend eine Eingabevorrichtung, um, wenn die Arbeitsvorrichtung (2), die mit dem Maschinenkörper (3) über die Verbindung (8) verbunden ist, der Streuer ist, eine Eingabe des Streuarbeitsbereichs derart zu empfangen, dass der eingegebene Streuarbeitsbereich mit dem Streuer verknüpft wird, wobei
die Bereichserfassungseinheit (51g) den Streuarbeitsbereich, der durch die Eingabevorrichtung empfangen wird, erfasst.

3. Arbeitsmaschine (1) nach Anspruch 2, ferner umfassend eine Speichereinheit (53), um den Streuarbeitsbereich, der durch die Eingabevorrichtung empfangen wird, zu speichern, wobei:
die Eingabevorrichtung eine Anzeigevorrichtung (50) ist, um, wenn die Arbeitsvorrichtung (2), die mit dem Maschinenkörper (3) über die Verbindung (8) verbunden ist, der Streuer ist, einen Eingabebildschirm (M5) anzuzeigen, um eine Eingabe des Streuarbeitsbereichs zu empfangen; und
die Speichereinheit (53) den Streuarbeitsbereich, der in den Eingabebildschirm (M5) eingegeben und durch diesen empfangen wird, und Informationen, die den Streuer angeben, der dem Streuarbeitsbereich entspricht, derart speichert, dass der Streuarbeitsbereich und der Streuer miteinander verknüpft werden.

4. Arbeitsmaschine nach Anspruch 2, ferner umfassend eine Speichereinheit (53), um den Streuarbeitsbereich, der durch die Eingabevorrichtung empfangen wird, zu speichern, wobei:
die Speichereinheit (53) Informationen, die mindestens eine unterschiedliche Arbeitsvorrichtung außer dem Streuer und eine voreingestellte Arbeitsfläche angeben, derart speichert, dass die mindestens eine unterschiedliche Arbeitsvorrichtung und der voreingestellte Arbeitsbereich miteinander verknüpft werden; und
wenn die Arbeitsvorrichtung (2), die über die Verbindung (8) mit dem Maschinenkörper (3) verbunden ist, die mindestens eine unterschiedliche Arbeitsvorrichtung ist, die Bereichserfassungseinheit (51g) den voreingestellten Arbeitsbereich von der Speichereinheit (53) erfasst, und die Arbeitseinstelleinheit (51i) die Arbeitsstartposition (STn) und die Arbeitsendposition (ETn), die die Enden jedes der mindestens zwei geraden Abschnitte (L1n) auf den gegenüberliegenden Seiten der Arbeitsfläche (E2) definieren, einstellt, um zwischen der Arbeitsstartposition (STn) und der Arbeitsendposition (ETn), die auf einer oder jeder der gegenüberliegenden Seiten der Arbeitsfläche (E2) aneinander angrenzend sind, eine Positionsdifferenz einer Vorne-Hinten-Richtung der Arbeitsmaschine (1) zu bestimmen, wenn sie sich in der Arbeitsstartposition (STn) oder der Arbeitsendposition (ETn) gemäß dem voreingestellten Arbeitsbereich, der durch die Bereichserfassungseinheit (51g) erfasst wird, befindet.

5. Arbeitsmaschine (1) nach Anspruch 4, wobei die Speichereinheit (53) Informationen, die den Streuer angeben, der dem Streuarbeitsbereich entspricht, derart speichert, dass der Streuarbeitsbereich und der Streuer miteinander verknüpft werden.

6. Arbeitsmaschine (1) nach einem der Ansprüche 1 bis 5, wobei, wenn die Arbeitsmaschine (1) mit einer Arbeitsvorrichtung (2) bereitgestellt ist, die über die Verbindung (8) mit dem Maschinenkörper (3) verbunden ist, gemäß der geplanten Fahrtroute (L), die Steuereinheit (63) für die automatische Fahrt die Arbeitsmaschine (1) veranlasst, nachdem sie mit dem Maschinenkörper (3) gefahren ist und mit der Arbeitsvorrichtung (2) auf einer Linie, die einem der mindestens zwei angrenzenden geraden Abschnitte (L1n) entspricht, gearbeitet hat, ein Arbeiten mit der Arbeitsvorrichtung (2) in einer Position zu beenden, die der Arbeitsendposition (Etn) entspricht, die das Ende des einen der mindestens zwei angrenzenden geraden Abschnitte (L1n) definiert, mit dem Maschinenkörper (3) auf einer Linie, die dem mindestens einen Wendeabschnitt (L2n) entspricht, zu wenden und das Arbeiten mit der Arbeitsvorrichtung (2) in einer Position, die der Arbeitsstartposition (STn) entspricht, zu beginnen, wobei dadurch die Arbeitsmaschine (1) veranlasst wird, mit dem Maschinenkörper (3) auf einer Linie, die einem anderen der mindestens zwei angrenzenden geraden Abschnitte (L1n) entspricht, zu fahren, während sie mit der Arbeitsvorrichtung (2) arbeitet.

7. Arbeitsmaschine (1) nach Anspruch 6, wobei:
die Steuereinheit (63) für die automatische Fahrt die Arbeitsvorrichtung (2), die mit dem Maschinenkörper (3) über die Verbindung (8) verbunden ist, gemäß der Arbeitsstartposition (STn) und der Arbeitsendposition (ETn), die durch die Arbeitseinstelleinheit (51i) eingestellt werden, steuert; und
die Steuereinheit (63) für die automatische Fahrt die Arbeitsvorrichtung (2), die über die Verbindung (8) mit dem Maschinenkörper (3) verbunden ist, veranlasst, mit einem Ausführen der Arbeit zu beginnen, wenn die Arbeitsvorrichtung (2) die Position, die der Arbeitsstartposition (STn) entspricht, passiert hat, und die Arbeitsvorrichtung (2) veranlasst, das Ausführen der Arbeit zu beenden, wenn die Arbeitsvorrichtung (2) die Position, die der Arbeitsendposition (ETn) entspricht, passiert hat.

8. Arbeitsmaschine (1) nach einem der Ansprüche 1 bis 7, ferner umfassend eine Routenvorbereitungseinheit (51h), um die geplante Fahrtroute (L) vorzubereiten, wobei
die Arbeitseinstelleinheit (51i), auf der geplanten Fahrtroute (L), die durch die Routenvorbereitungseinheit (51h) vorbereitet wird, die Arbeitsstartposition (STn) und die Arbeitsendposition (ETn), die jede der mindestens zwei Arbeitsfahrtlinien (L1n) definieren, einstellt, um der Arbeitsvorrichtung (2), die über die Verbindung (8) mit dem Maschinenkörper (3) verbunden ist, zu entsprechen.

## Revendications

1. Machine de travail (1) comprenant :
un corps de machine (3) ;
une tringlerie (8) capable de relier un dispositif de travail (2) au corps de machine (3) ; et
une unité de commande de déplacement automatique (63) pour amener le corps de machine (3) à effectuer un déplacement automatique selon un itinéraire de déplacement planifié (L), et pour commander le dispositif de travail (2) lorsque la machine de travail (1) est pourvue du dispositif de travail (2) relié au corps de machine (3) par l'intermédiaire de la tringlerie (8), dans laquelle
l'itinéraire de déplacement planifié (L) est défini dans une carte de champ (MP) comportant une zone de travail (E2) permettant de travailler avec la machine de travail (1) et une zone de rotation (E1) permettant de tourner la machine de travail (1), la zone de rotation (E1) comportant des parties opposées sur des côtés opposés de la zone de travail (E2), et
l'itinéraire de déplacement planifié (L) comporte
au moins deux sections droites (L1n) adjacentes s'étendant à travers la zone de travail (E2) entre les parties opposées de la zone de rotation (E1),
au moins une section de rotation (L2n) s'étendant dans au moins l'une des parties opposées de la zone de rotation (E1) pour joindre des extrémités respectives des au moins deux sections droites (L1n) adjacentes l'une à l'autre,
une position de début de travail (STn) définissant une extrémité de chacune des au moins deux sections droites (L1n) adjacentes sur chacun des côtés opposés de la zone de travail (E2), et
une position de fin de travail (ETn) définissant une autre extrémité de chacune des au moins deux sections droites (L1n) adjacentes sur chacun des côtés opposés de la zone de travail (E2), de sorte que la position de début de travail (STn) définissant la fin de l'une des au moins deux sections droites (L1n) adjacentes et la position de fin de travail (ETn) définissant la fin d'une autre des au moins deux sections droites (L1n) adjacentes sont adjacentes entre elles sur chacun des côtés opposés de la zone de travail (E2),
**caractérisée en ce que** la machine de travail (1) comprend :
une unité d'acquisition de plage (51g) pour acquérir, lorsque le dispositif de travail (2) relié par l'intermédiaire de la tringlerie (8) au corps de machine (3) est un épandeur, une plage de travail d'épandage qui est une plage d'épandage d'une matière épandue par l'épandeur dans une direction avant-arrière de l'épandeur ; et
une unité de définition de travail (51i) pour définir la position de début de travail (STn) et la position de fin de travail (ETn) définissant les extrémités de chacune des au moins deux sections droites (L1n) sur les côtés opposés de la zone de travail (E2) de sorte que, lorsque le dispositif de travail (2) relié par l'intermédiaire de la tringlerie (8) au corps de machine (3) est l'épandeur, l'unité de définition de travail (51i) détermine, entre la position de début de travail (STn) et la position de fin de travail (ETn) adjacentes entre elles sur l'un ou chacun des côtés opposés de la zone de travail (E2), une différence de position dans une direction avant-arrière de la machine de travail (1) lorsqu'elle se trouve dans la position de début de travail (STn) ou la position de fin de travail (ETn) selon la plage de travail d'épandage acquise par l'unité d'acquisition de plage (51g).

2. Machine de travail (1) selon la revendication 1, comprenant en outre un dispositif d'entrée destiné à recevoir, lorsque le dispositif de travail (2) relié au corps de machine (3) par l'intermédiaire de la tringlerie (8) est l'épandeur, une entrée de la plage de travail d'épandage de telle sorte que la plage de travail d'épandage entrée est associée à l'épandeur, dans laquelle
l'unité d'acquisition de plage (51g) acquiert la plage de travail d'épandage reçue par le dispositif d'entrée.

3. Machine de travail (1) selon la revendication 2, comprenant en outre une unité de stockage (53) destinée à stocker la plage de travail d'épandage reçue par le dispositif d'entrée, dans laquelle :
le dispositif d'entrée est un dispositif d'affichage (50) destiné à afficher, lorsque le dispositif de travail (2) relié au corps de machine (3) par l'intermédiaire de la tringlerie (8) est l'épandeur, un écran d'entrée (M5) destiné à recevoir des entrées de la plage de travail d'épandage ; et
l'unité de stockage (53) stocke la plage de travail d'épandage entrée et reçue par l'écran d'entrée (M5) et des informations indiquant l'épandeur correspondant à la plage de travail d'épandage de telle sorte que la plage de travail d'épandage et l'épandeur sont associés l'un à l'autre.

4. Machine de travail selon la revendication 2, comprenant en outre une unité de stockage (53) destinée à stocker la plage de travail d'épandage reçue par le dispositif d'entrée, dans laquelle :
l'unité de stockage (53) stocke des informations indiquant au moins un dispositif de travail différent de l'épandeur et une plage de travail prédéfinie de telle sorte que l'au moins un dispositif de travail différent et la plage de travail prédéfinie sont associés l'un à l'autre ; et
lorsque le dispositif de travail (2) relié au corps de machine (3) par l'intermédiaire de la tringlerie (8) est l'au moins un dispositif de travail différent, l'unité d'acquisition de plage (51g) acquiert la plage de travail prédéfinie à partir de l'unité de stockage (53), et l'unité de définition de travail (51i) définit la position de début de travail (STn) et la position de fin de travail (ETn) définissant les extrémités de chacune des au moins deux sections droites (L1n) sur les côtés opposés de la zone de travail (E2) de manière à déterminer, entre la position de début de travail (STn) et la position de fin de travail (ETn) adjacentes l'une à l'autre sur l'un ou chacun des côtés opposés de la zone de travail (E2), une différence de position d'une direction avant-arrière de la machine de travail (1) lorsqu'elle se trouve dans la position de début de travail (STn) ou la position de fin de travail (ETn) selon la plage de travail prédéfinie acquise par l'unité d'acquisition de plage (51g).

5. Machine de travail (1) selon la revendication 4, dans laquelle l'unité de stockage (53) stocke des informations indiquant l'épandeur correspondant à la plage de travail d'épandage de telle sorte que la plage de travail d'épandage et l'épandeur sont associés l'un à l'autre.

6. Machine de travail (1) selon l'une quelconque des revendications 1 à 5, dans laquelle, lorsque la machine de travail (1) est pourvue d'un dispositif de travail (2) relié au corps de machine (3) par l'intermédiaire de la tringlerie (8), selon l'itinéraire de déplacement planifié (L), l'unité de commande de déplacement automatique (63) amène la machine de travail (1), s'étant déplacée avec le corps de machine (3) et travaillé avec le dispositif de travail (2) sur une ligne correspondant à l'un parmi les au moins deux sections droites (L1n) adjacentes, à arrêter de travailler avec le dispositif de travail (2) dans une position correspondant à la position de fin de travail (ETn) définissant la fin de l'une des au moins deux sections droites (L1n) adjacentes, à tourner avec le corps de machine (3) sur une ligne correspondant à l'au moins une section de rotation (L2n), et à commencer à travailler avec le dispositif de travail (2) dans une position correspondant à la position de début de travail (STn), amenant de ce fait la machine de travail (1) à se déplacer avec le corps de machine (3) sur une ligne correspondant à une autre des au moins deux sections droites (L1n) adjacentes tout en travaillant avec le dispositif de travail (2).

7. Machine de travail (1) selon la revendication 6, dans laquelle :
l'unité de commande de déplacement automatique (63) commande le dispositif de travail (2) relié au corps de machine (3) par l'intermédiaire de la tringlerie (8) selon la position de début de travail (STn) et la position de fin de travail (ETn) définies par l'unité de définition de travail (51i) ; et
l'unité de commande de déplacement automatique (63) amène le dispositif de travail (2) relié au corps de machine (3) par l'intermédiaire de la tringlerie (8) à commencer à travailler lorsque le dispositif de travail (2) a franchi la position correspondant à la position de début de travail (STn) et amène le dispositif de travail (2) à arrêter d'effectuer le travail lorsque le dispositif de travail (2) a franchi la position correspondant à la position de fin de travail (ETn).

8. Machine de travail (1) selon l'une quelconque des revendications 1 à 7, comprenant en outre une unité de préparation d'itinéraire (51h) destinée à préparer l'itinéraire de déplacement planifié (L), dans laquelle
l'unité de définition de travail (51i) définit, sur l'itinéraire de déplacement planifié (L) préparé par l'unité de préparation d'itinéraire (51h), la position de début de travail (STn) et la position de fin de travail (ETn) définissant chacune des au moins deux lignes de déplacement de travail (L1n) pour correspondre au dispositif de travail (2) relié au corps de machine (3) par l'intermédiaire de la tringlerie (8).
